# EUROPÄISCHE PATENTSCHRIFT

(11) **EP 3 450 146 B1**
(45) Veröffentlichungstag und Bekanntmachung des Hinweises auf die Patenterteilung: **24.02.2021**
(21) Anmeldenummer: 18190122.4
(22) Anmeldetag: 22.08.2018
(51) Int. Cl.: B29C 70/38, B29C 64/106, B29C 64/209, B33Y 10/00, B33Y 30/00, B29C 70/52, B29C 31/04

(54) **APPLIKATIONSVORRICHTUNG UND VERFAHREN ZUM AUSGEBEN EINES FORMFASERVERBUNDSTRANGS**
APPLICATION DEVICE AND METHOD FOR DISPENSING A FIBRE COMPOSITE STRAND
APPAREIL D'APPLICATION ET METHODE DE DISTRIBUTION D'UN CORDON MOULÉ EN COMPOSITE RENFORCÉE PAR DES FIBRES

(30) Priorität: 30.08.2017 DE 102017119936
(43) Veröffentlichungstag der Anmeldung: 06.03.2019
(73) Patentinhaber: Airbus Operations GmbH, 21129 Hamburg (DE)
(72) Erfinder: Fette, Marc, 21129 Hamburg (DE); Herrmann, Axel Siegfried, 21129 Hamburg (DE); Hentschel, Martin, 21129 Hamburg (DE); Wulfsberg, Jens P., 22607 Hamburg (DE)
(74) Vertreter: Bird & Bird LLP

(56) Entgegenhaltungen:
- US-A- 5 936 861
- US-A1- 2012 040 106
- US-A1- 2014 061 974
- US-B1- 6 558 146

## Beschreibung

### TECHNISCHES GEBIET

Die Erfindung betrifft eine Applikationsvorrichtung zum Ausgeben eines Formfaserverbundstrangs. Außerdem betrifft die Erfindung ein Verfahren zum Ausgeben eines Formfaserverbundstrangs.

### HINTERGRUND DER ERFINDUNG

Zur Herstellung eines Faserverbundbauteils werden oftmals kurzfaserverstärkte oder langfaserverstärkte Thermoplaste verwendet. Bei den Fasern kann es sich beispielsweise um Kohlenstofffasern, Aramidfasern oder Glasfasern handeln. Werden Kurzfaser als Verstärkung in das Thermoplast eingebracht, so weisen sie eine mittlere Faserlänge von weniger als 5 mm auf. In diesem Fall kann das Faserverbundbauteil mittels Spritgießen oder Extrudieren aus dem kurzfaserverstärkten Thermoplast hergestellt werden. Werden hingegen Langfasern mit einer mittleren Faserlänge von 5 mm bis 50 mm verwendet, so kann ein Faserverbundbauteil daraus mittel Fließpressen hergestellt werden. Besonderer Aufmerksamkeit bedürfen jedoch die Bereiche eines herzustellenden Faserverbundbauteils, die komplexe Geometrien mit Hinterschneidungen repräsentieren. Denn derartige Bereiche können in der Praxis oftmals hohen Kräften und/oder mechanischen Momenten ausgesetzt sein. Wenn nun derartige Bereiche zumindest im Wesentlichen nur durch das thermoplastisches Matrixmaterial mit nur wenigen Kurzfasern oder Langfasern ausgebildet sind, so ist dies von besonderem Nachteil für die jeweilige Stabilität.

Aus dem Stand der Technik sind außerdem Druckverfahren bekannt, um mit Fasern versetztes thermoplastisches Matrixmaterial zu drucken. Das Matrixmaterial ist dabei mit sehr kurzen Fasern versetzt, wobei die Fasern eine mittlere Faserlänge von maximal 5 mm aufweisen. Bei dem für das Druckverfahren verwendeten Material handelt es sich also um ein mit Kurzfasern versetztes thermoplastisches Matrixmaterial. In der Praxis wurde jedoch festgestellt, dass mit einem derartigen Material hergestellte Faserverbundbauteile eine nur limitierte Stabilität aufweisen. Dies gilt insbesondere für Abschnitte des Faserverbundbauteils mit einer hohen geometrischen Komplexität, wie beispielsweise ein Abschnitt mit einer Hinterschneidung oder Abschnitten, die sich über eine Grundfläche eines Bauteils erheben.

Das Dokument US 6 558 146 B1 betrifft eine Vorrichtung zum Erzeugen eines Strangs aus faserverstärktem Matrixmaterial und zur Herstellung von einer faserverstärkten geformten Strukturkomponente.

Das Dokument US 2014/061974 A1 offenbart ein Verfahren und eine Vorrichtung zur additiven Herstellung von dreidimensionalen Objekten.

Das Dokument US 5 936 861 A1 betrifft ein Verfahren und eine Vorrichtung zum Herstellen dreidimensionaler Objekte aus Verbundmaterial.

Das Dokument US 2012/040106 A1 betrifft ein Verfahren zum Formen eines faserverstärkten Kunststoffteils.

### BESCHREIBUNG DER ERFINDUNG

Der Erfindung liegt die Aufgabe zugrunde, eine Vorrichtung und/oder ein Verfahren bereitzustellen, die bzw. das eine additive Herstellung eines Faserverbundbauteils mit einer komplexen Geometrie, insbesondere mit einer Hinterschneidung, mittels eines Materials ermöglicht, das dem herzustellenden Faserverbundbauteil eine besonders hohe mechanische Stabilität bietet.

Gemäß einem ersten Aspekt der Erfindung wird die genannte Aufgabe gelöst durch eine Applikationsvorrichtung mit den Merkmalen des Anspruchs 1. Vorteilhafte Ausgestaltungen der Applikationsvorrichtung sind in den zugehörigen Unteransprüchen und/oder in der nachfolgenden Beschreibung wiedergegeben.

Die Applikationsvorrichtung ist mittels der Koppeleinheit an die Handhabungsvorrichtung lösbar befestigt.

Die Applikationsvorrichtung ist deshalb als eine mobile Applikationsvorrichtung ausgebildet. Ist die Applikationsvorrichtung mittels der Koppeleinheit an der Handhabungsvorrichtung befestigt, kann die Handhabungsvorrichtung die Applikationsvorrichtung im Raum bewegen. So kann die Applikationsvorrichtung mittels der Handhabungsvorrichtung beispielsweise derart im Raum geführt bewegt werden, dass der von der Ausgabeeinheit ausgegebene Formfaserverbundstrang entlang eines gewünschten Ausgabepfads ausgegeben wird. Dieser Ausgabepfad kann vorzugsweise derart gewählt sein, dass damit eine komplexe Geometrie eines Abschnitts eines herzustellenden Faserverbundbauteils erstellt werde. Soll das Faserverbundbauteil beispielsweise einen hakenförmigen Abschnitt aufweisen, so kann die Applikationsvorrichtung für diesen Abschnitt des Faserverbundbauteils mittels der Handhabungsvorrichtung derart geführt werden, dass ein Formfaserverbundstrang von der Applikationsvorrichtung entlang eines Ausgabepfads ausgegeben wird, der von der Querschnittsform des hakenförmigen Abschnitts des Faserverbundbauteils bestimmt ist. Der Ausgabepfad kann beispielsweise bogenförmig und/oder nach einer anderen Geometrie ausgebildet sein, so dass der entsprechend ausgegebene Formfaserverbundstrang den hakenförmigen Abschnitt des Faserverbundbauteils formt. Außerdem kann der Ausgabepfad derart gewählt werden, dass dieser entlang eines zu erwartenden Lastpfades des hakenförmigen Abschnitts des Faserverbundbauteils verläuft. Indem sich der von einem Formfaserverbundstrang gebildete Abschnitt des Faserverbundbauteils entlang eines Lastpfades erstreckt, gilt analoges für die Endlosfasern. Sie erstrecken sich also ununterbrochen entlang des Lastpfades. Dies bietet den Vorteil, dass mögliche, später auf den hakenförmigen Abschnitt einwirkenden Kräfte besonders gut an das übrige Faserverbundbauteil weitergeleitet werden können. Denn im Gegenteil zu sehr kurzen Fasern müssen die Kräfte nicht wiederholt von Faser zu Faser entlang des Lastpfads übertragen werden. Ein aus dem Formfaserverbundstrang hergestellter Abschnitt eines Faserverbundbauteils oder ein daraus vollständig hergestelltes Faserverbundbauteil kann deshalb besonders gewichtsparend und zugleich besonders stabil sein. Weitere Vorteile der Verwendung der Applikationsvorrichtung ergeben sich aus der nachfolgenden Erläuterung.

Mittels der Vorformeinheit kann ein Rohfaserstrang mit einer Vielzahl von Endlosfasern kontinuierlich zu einem Formfaserstrang geformt werden. Bei den Endlosfasern handelt es sich um Fasern mit einer mittleren Faserlänge von mehr als 80 mm, vorzugsweise um eine mittlere Faserlänge von mehr als 200 mm. Die Endlosfasern werden vorzugsweise von einer Faserrolle kontinuierlich abgerollt und sodann als Rohfaserstrang an die Vorformeinheit geleitet. Der Rohfaserstrang kann auch als Roving ausgebildet und/oder als Roving bezeichnet sein. Durch eine Anpassung der Menge der Vielzahl von Endlosfasern und/oder durch die geometrische Verteilung bzgl. eines Durchlassquerschnitts der Vorformeinheit kann die Vorformeinheit dazu ausgebildet sein, um den Formfaserquerschnitt zu formen. Durch entsprechende Anpassungsmöglichkeiten der Vorformeinheit ist der Formfaserquerschnitt einstellbar. Mit anderen Worten kann von der Vorformeinheit ein Formfaserstrang mit einem einstellbaren bzw. eingestellten Formfaserquerschnitt ausgegeben werden. Dies bietet den Vorteil, dass die Endlosfasern bei dem Formfaserstrang bereits derart über den Querschnitt des Formfaserstrangs verteilt angeordnet sind, so dass von den Endlosfasern im Querschnitt der Formfaserquerschnitt gebildet wird. Der Formfaserquerschnitt kann dabei beispielsweise zumindest annährend die Form aufweisen, wie es für den Formfaserverbundstrang später beim Ausgeben durch die Applikationsvorrichtung vorgesehen ist. Durch die Vorformeinheit kann deshalb vorzugsweise gewährleistet werden, dass der Formfaserverbundstrang eine besonders vorteilhafte Verteilung bzgl. der darin enthaltenen Fasern aufweist.

Ein von der Vorformeinheit bereitgestellter Formfaserstrang wird an die Imprägnierungseinheit kontinuierlich geführt und/oder gefördert.

Die Imprägnierungseinheit dient zum Imprägnieren des Formfaserstrangs mit nicht vollständig vernetztem Matrixmaterial. Diese Imprägnierung erfolgt kontinuierlich. Somit kann von der Imprägnierungseinheit der Faserverbundstrang kontinuierlich ausgegeben werden. Der Faserverbundstrang wird also von der Imprägnierungseinheit durch Imprägnierung des Faserverbundstrangs mit dem nicht vollständig vernetzten Matrixmaterial gebildet. Das Matrixmaterial ist beispielsweise duroplastisches Matrixmaterial oder thermoplastisches Matrixmaterial. Für die Imprägnierung ist es außerdem von Vorteil, wenn das Matrixmaterial flüssig oder zähflüssig ist. Da der Formfaserstrang kontinuierlich zugeführt und der Faserverbundstrang kontinuierlich von der Imprägnierungseinheit gebildet und/oder bereitgestellt wird, ist es vorgesehen, dass die Imprägnierungseinheit auch zum kontinuierlichen Imprägnieren ausgebildet ist.

Der Faserverbundstrang weist einen Faserverbundquerschnitt auf. Vorzugsweise entspricht der Faserverbundquerschnitt zumindest im Wesentlichen dem Formfaserquerschnitt. Als vorteilhaft hat es sich herausgestellt, wenn der Faserverbundquerschnitt zumindest zu mindestens 70 % mit dem Formfaserquerschnitt deckungsgleich ist. Durch die hohe Querschnittsähnlichkeit zwischen dem Formfaserstrang und dem Faserverbundstrang können die Vorteile, die der Formfaserstrangs im Hinblick auf die Verteilung der Fasern biete, aufrechterhalten bleiben.

Der Faserverbundstrang wird kontinuierlich zur Nachformeinheit, und insbesondere zu der zugehörigen Antriebseinheit, geführt und/oder gefördert.

Mittels der Antriebseinheit kann der Faserverbundstrang kontinuierlich zu und durch die Ausgabeeinheit gepresst werden. Die Antriebseinheit und die Ausgabeeinheit können dazu unmittelbar hintereinander angeordnet sein. Mittels der Ausgabeeinheit wird ein durch die Ausgabeeinheit kontinuierlich gepresster Faserverbundstrang zu einem bzw. dem Formfaserverbundstrang geformt und ausgegeben. Von der Ausgabeeinheit kann dazu ein Führungskanal bereitgestellt sein, durch den der Faserverbundstrang gepresst wird und dabei basierend auf einem Durchlassquerschnitt des Führungskanals zu dem Formfaserverbundstrang mit dem zugehörigen Ausgabequerschnitt geformt werden. Die Vorformeinheit und die Ausgabeeinheit sind derart eingestellt, dass der Formfaserquerschnitt zu mindestens 70 % mit dem Ausgabequerschnitt deckungsgleich ist. Dies gewährleistet, dass die Ausgabeeinheit den Faserverbundstrang nicht vollständig umformen muss, sondern dass nur eine geringfügige Querschnittsanpassung ausreicht, um den Ausgabequerschnitt für den Formfaserverbundstrang zu gewährleisten. Die Ausgabeeinheit und die Vorformeinheit sind jeweils einstellbar, so dass die gewünschte Deckungsgleichheit erreichbar ist. In der Praxis kann es vorgesehen sein, dass der Ausgabequerschnitt vorbestimmt ist und/oder wird. Gemäß der Erfindung ist die Vorformeinheit derart eingestellt, dass der Formfaserquerschnitt zu mindestens 70 % mit dem gewünschten Ausgabequerschnitt deckungsgleich ist.

In Bezugnahme auf das zuvor erläuterte Beispiel mit dem herzustellenden Faserverbundbauteil, das einen hakenförmigen Abschnitt aufweist, kann es beispielsweise vorgesehen werden, dass der hakenförmige Abschnitt eine bestimmte Dicke und/oder eine bestimmte Breite aufweist. Mit diesen Angaben kann ein vorteilhafter Ausgabequerschnitt für die Ausgabeeinheit gewählt werden. Dies kann durch Einstellen der Ausgabeeinheit gewährleistet werden. Entsprechende Einstellungen sind auch an der Vorformeinheit möglich, um die gewünschte Deckungsgleichheit zu erreichen. Wird der Formfaserverbundstrang nun mittels der Applikationsvorrichtung entlang des zuvor erläuterten Ausgabepfads ausgegeben, so bietet dies den Vorteil, dass die Fasern des ausgegeben Formfaserverbundstrangs zumindest im Wesentlichen entlang des Ausgabepfads bzw. parallel dazu angeordnet sind. Da es sich bei den Fasern um Endlosfasern handelt, können diese auf den hakenförmigen Abschnitt des Faserverbundbauteils einwirkende Kräfte besonders gut an weitere Abschnitte des Faserverbundbauteils weiterleiten. Dies gilt insbesondere dann, wenn der Ausgabepfad zumindest im Wesentlichen entlang eines vorhersagbaren Pfads innerhalb des hakenförmigen Abschnitts des Faserverbundbauteils gewählt ist, entlang dessen eine besonders vorteilhafte Weiterleitung von Kräften möglich ist. Da der Faserverbundstrang mittels der Ausgabeeinheit und zumindest indirekt durch die Handhabungsvorrichtung entlang eines vorbestimmten Pfades geführt werden kann, kann die Applikationsvorrichtung auch als Applikator oder als Druckvorrichtung bezeichnet werden. Die Ausgabeeinheit als solches kann auch als Düseneinheit bezeichnet werden.

Um die Koppeleinheit an die Handhabungsvorrichtung lösbar zu befestigen, kann die Koppeleinheit beispielsweise als Befestigungsplatte oder als ein Befestigungsgestell ausgebildet sein. Ein zu der Koppeleinheit korrespondierend ausgebildete Aufnahmeeinheit kann für die Handhabungsvorrichtung vorgesehen sein. Somit ist ein lösbares Befestigen und/oder lösbares, mechanisches Verbinden zwischen der Koppeleinheit und der Aufnahmeeinheit der Handhabungsvorrichtung möglich. Die Handhabungsvorrichtung kann beispielsweise als ein Roboter, insbesondere ein Industrieroboter, oder als ein Portalroboter, beispielsweise ein mittels Linearantrieben verfahrbarer Portalroboter, ausgebildet sein.

Im Hinblick auf den Formfaserquerschnitt und dem Ausgabequerschnitt wird darauf hingewiesen, dass sich der Begriff "deckungsgleich" auf einen Vergleich der beiden Querschnitte bezieht. Die beiden Querschnitte müssen dazu praktisch nicht unmittelbar aufeinander gelegt werden. Vielmehr kann der Vergleich als ein theoretischer, technischer Vergleich angesehen werden. Ein tatsächliches "Übereinanderlegen" ist nicht notwendig. Nach einem Beispiel bestimmt sich die Deckungsgleichheit aus dem Teil des Ausgabequerschnitts, der bei einer theoretischen Aufeinanderlegung von Formfaserquerschnitt und Ausgabequerschnitt mit dem Formfaserquerschnitt in Überlappung ist, im Verhältnis zum gesamten Ausgabequerschnitt oder zum gesamten Formfaserquerschnitt. Umgekehrt ist die Bestimmung ebenfalls denkbar. Nach einem weiteren Beispiel bestimmt sich die Deckungsgleichheit also aus dem Teil des Formfaserquerschnitts, der bei einer theoretischen Aufeinanderlegung von Formfaserquerschnitt und Ausgabequerschnitt mit dem Ausgabequerschnitt in Überlappung ist, im Verhältnis zum gesamten Ausgabequerschnitt oder zum gesamten Formfaserquerschnitt. Eine vollständige Deckungsgleichheit liegt beispielsweise dann vor, wenn die äußere Kontur des Formfaserquerschnitts mit der äußeren Kontur des Ausgabequerschnitts übereinstimmt. Ist dies nicht der Fall, können der Formfaserquerschnitt und der Ausgabequerschnitt beispielsweise teilweise miteinander übereinstimmen. In diesem Fall liegt beispielsweise eine Deckungsgleichheit von weniger als 100 % vor. Für die Applikationsvorrichtung ist vorgesehen, dass die Vorformeinheit und die Ausgabeeinheit derart eingestellt sind, dass der Formfaserquerschnitt zu mindestens 70 %, oder mehr, mit dem Ausgabequerschnitt deckungsgleich ist. So können die Vorformeinheit und die Ausgabeeinheit beispielsweise derart eingestellt sein, dass der Formfaserquerschnitt zu mindestens 75 %, mindestens 80 %, mindestens 85 % oder mindestens 90 % mit dem Ausgabequerschnitt deckungsgleich ist.

Die hohe Deckungsgleichheit der beiden Querschnitte bietet den Vorteil, dass eine vorteilhafte Verteilung und/oder Dichte an Fasern in dem herzustellenden Faserverbundbauteil bzw. in dem Formfaserverbundstrang erreichbar ist. Die hohe Deckungsgleichheit der Querschnitte bietet außerdem den Vorteil, dass die Endlosfasern entlang von Lastpfaden des herzustellenden Faserverbundabbauteils ablegbar sind.

Bei dem Matrixmaterial, das zur Imprägnierung mittels der Imprägnierungseinheit verwendbar ist, handelt es sich vorzugsweise um nicht vollständig vernetztes Matrixmaterial. Dieses Matrixmaterial kann beispielsweise nicht vollständig vernetztes Duroplast bzw. duroplastisches Matrixmaterial sein. Es kann jedoch auch besonders bevorzugt vorgesehen sein, dass es sich um nicht vollständig vernetztes Thermoplast bzw. thermoplastisches Material handelt.

Für die Nachformeinheit und/oder insgesamt für die Applikationsvorrichtung kann eine Temperiereinheit vorgesehen sein, die zum Aushärten bzw. zum Erstarren des ausgegeben Formfaserverbundstrangs ausgebildet ist. Dazu kann die Temperiereinheit ausgebildet sein, das Aushärten mittels Wärme, Kälte und/oder Licht auszuführen.

Weiterhin hat es sich als vorteilhaft herausgestellt, wenn die Koppeleinheit, die Vorformeinheit, die Imprägnierungseinheit und die Ausgabeeinheit der Applikationsvorrichtung mechanisch miteinander verbunden und/oder gekoppelt sind. Dies kann beispielsweise auch mithilfe eines Gestells der Applikationsvorrichtung erfolgen. So können die Koppeleinheit, die Vorformeinheit, die Imprägnierungseinheit und/oder die Nachformeinheit mit dem Gestell der Applikationsvorrichtung mechanisch verbunden sein. Dies bietet den Vorteil, dass die Applikationsvorrichtung mittels der Handhabungsvorrichtung im Raum frei bewegbar ist.

Als vorteilhaft hat es sich herausgestellt, wenn die Endlosfasern als Kohlenstofffasern, Aramidfasern und/oder Glasfasern ausgebildet sind. Weiterhin kann es von Vorteil sein, wenn die Endlosfasern als Hybridfasern ausgebildet sind. In diesem Fall können die Endlosfasern von mindestens zwei unterschiedlichen Fasertypen, wie beispielsweise von Kohlenstofffasern und Glasfasern, gebildet sein.

Für die Imprägnierung hat es sich als vorteilhaft herausgestellt, wenn diese durch Injektion des noch nicht vollständig vernetzten Matrixmaterials erfolgt. So kann das noch nicht vollständig vernetzte Matrixmaterial mittels der Imprägnierungseinheit auf bzw. in den Formfaserstrang injiziert werden, um den Faserverbundstrang zu bilden. Es hat sich jedoch auch als vorteilhaft herausgestellt, wenn die Imprägnierung mittels der Imprägnierungseinheit durch ein Matrixbad erfolgt. So kann die Imprägnierungseinheit ein Gefäß, insbesondere ein Bad, aufweisen, in dem das noch nicht vollständig vernetzte Matrixmaterial eingebracht ist. Weiterhin kann die Imprägnierungseinheit dazu ausgebildet sein, um den kontinuierlich zugeführten Formfaserstrang durch das noch nicht vollständig vernetzte Matrixmaterial in dem Gefäß zu führen, um sodann daraus den Faserverbundstrang zu bilden.

Eine vorteilhafte Ausgestaltung der Applikationsvorrichtung zeichnet sich dadurch aus, dass die Vorformeinheit eine erste Werkzeugaufnahme und ein erstes, austauschbar von der ersten Werkzeugaufnahme gehaltenes Formwerkzeug aufweist, wobei der Formfaserquerschnitt von dem ersten Formwerkzeug bestimmt ist. Die erste Werkzeugaufnahme kann dazu ausgebildet sein, um das erste Formwerkzeug lösbar zu halten und/oder zu befestigen, so dass das erste Formwerkzeug austauschbar ist. Das erste Formwerkzeug kann also gegen ein anderes erstes Formwerkzeug getauscht werden, so dass ein entsprechend anderer, gewünschter Formfaserquerschnitt erreichbar ist. Vorzugsweise ist das erste Formwerkzeug als ein Modul-Formwerkzeug ausgebildet. Das erste Formwerkzeug kann deshalb auch als erstes Formwerkzeugmodul bezeichnet sein. Das erste Formwerkzeug kann einen Führungskanal für den Rohfaserstrang bilden, so dass daraus der Formfaserstrang geformt wird. Indem das erste Formwerkzeug austauschbar von der ersten Werkzeugaufnahme gehalten werden kann, ist die Vorformeinheit einstellbar. Denn durch die Wahl des ersten Formwerkzeugs, welches von der ersten Werkzeugaufnahme gehalten wird, kann der Formfaserquerschnitt bestimmt und somit eingestellt werden. Die Vorformeinheit ist also einstellbar, um einen gewünschten Formfaserquerschnitt zu erreichen.

Eine weitere Vorteilhafte Ausgestaltung der Applikationsvorrichtung zeichnet sich dadurch aus, dass die Ausgabeeinheit eine zweite Werkzeugaufnahme und ein zweites, austauschbar von der zweiten Werkzeugaufnahme gehaltenes Formwerkzeug aufweist, wobei der Ausgabequerschnitt von dem zweiten Formwerkzeug bestimmt ist. Die zweite Werkzeugaufnahme kann dazu ausgebildet sein, um das zweite Formwerkzeug lösbar zu halten und/oder zu befestigen, so dass das zweite Formwerkzeug austauschbar ist. Das zweite Formwerkzeug kann also gegen ein anderes zweites Formwerkzeug getauscht werden, so dass ein entsprechend anderer, gewünschter Ausgabequerschnitt erreichbar ist. Vorzugsweise ist das zweite Formwerkzeug als ein Modul-Formwerkzeug ausgebildet. Das zweite Formwerkzeug kann deshalb auch als zweites Formwerkzeugmodul bezeichnet sein. Das zweite Formwerkzeug kann einen Führungskanal für den Faserverbundstrang bilden, so dass daraus der Formfaserverbundstrang geformt wird. Indem das zweite Formwerkzeug austauschbar von der zweiten Werkzeugaufnahme gehalten werden kann, ist die Ausgabeeinheit einstellbar. Denn durch die Wahl des zweiten Formwerkzeugs, welches von der zweiten Werkzeugaufnahme gehalten wird, kann der Ausgabequerschnitt bestimmt und somit eingestellt werden. Die Ausgabeeinheit ist also einstellbar, um einen gewünschten Ausgabequerschnitt zu erreichen.

Eine weitere vorteilhafte Ausgestaltung der Applikationsvorrichtung zeichnet sich dadurch aus, dass das erste Formwerkzeug und das zweite Formwerkzeug derart zueinander bestimmt und/oder ausgebildet sind, so dass der Formfaserquerschnitt zu mindestens 70% mit dem Ausgabequerschnitt deckungsgleich ist. So kann der Durchlassquerschnitt des Führungskanals der Vorformeinheit beispielsweise derart bestimmt und/oder ausgebildet sein, so dass dieser Durchlassquerschnitt derart zu dem Durchlassquerschnitt eines Führungskanals der Ausgabeeinheit ausgebildet ist, so dass die Durchlassquerschnitte der beiden Führungskanäle zu mindestens 70 % deckungsgleich sind. Daraus resultiert, dass der Formfaserquerschnitt ebenfalls zu mindestens 70 % mit dem Ausgabequerschnitt deckungsgleich ist. Durch die geeignete Wahl des ersten Formwerkzeugs und des zweiten Formwerkzeugs kann also die gewünschte Deckungsgleichheit erreicht werden. Die Vorteile einer hohen Deckungsgleichheit wurden zuvor erläutert. Auf entsprechende Erörterungen wird an dieser Stelle in analoger Weise Bezug genommen.

In der Praxis kann es vorgesehen sein, dass das erste Formwerkzeug derart gewählt wird, dass der Formfaserquerschnitt zu mindestens 70 % mit dem Ausgabequerschnitt deckungsgleich ist. Wird also ein bestimmter Ausgabequerschnitt für das Ausgeben des Formfaserverbundstrangs gewünscht, beispielsweise um eine möglichst vorteilhafte Ausgestaltung eines Vorsprungs eines herzustellenden Faserverbundbauteils zu erreichen, so kann durch die Wahl des zweiten Formwerkzeugs zunächst der Ausgabequerschnitt und durch eine geeignete Wahl eines ersten Formwerkzeugs ein Faserformquerschnitt eingestellt werden, so dass die gewünschte Deckungsgleichheit gewährleistet ist.

Um die mechanische Komplexität des ersten Formwerkzeugs möglichst gering zu halten, hat es sich als vorteilhaft herausgestellt, wenn das erste Formwerkzeug dazu ausgebildet ist, genau einen Formfaserquerschnitt zu bestimmen. Das erste Formwerkzeug kann beispielsweise einstückig ausgebildet sein. Entsprechendes kann für das zweite Formwerkzeug gelten. Um also die mechanische Komplexität des zweiten Formwerkzeugs möglichst gering zu halten, hat es sich als vorteilhaft herausgestellt, wenn das zweite Formwerkzeug dazu ausgebildet ist, genau einen Formfaserquerschnitt zu bestimmen. Das zweite Formwerkzeug kann beispielsweise einstückig ausgebildet sein.

Eine vorteilhafte Ausgestaltung der Applikationsvorrichtung zeichnet sich dadurch aus, dass die Vorformeinheit mehrere verstellbare Vorformwerkzeugteile zum Formen des Formfaserstrangs aufweist, wobei die Vorformeinheit zum Verstellen der Vorformwerkzeugteile derart steuerbar ist, um den Formfaserstrang mit einem gesteuert eingestellten Formfaserquerschnitt zu formen. Um also einen gewünschten Formfaserquerschnitt einzustellen, werden die Vorformwerkzeugteile gesteuert, so dass diese derart verstellt werden, so dass mit den Vorformwerkzeugteilen der Formfaserstrang mit dem gewünschten, nunmehr eingestellten Formfaserquerschnitt geformt werden kann. Vorzugsweise sind die Vorformwerkzeugteile derart steuerbar, um einen Durchlassquerschnitt der Vorformeinheit einzustellen. Durch die verstellbaren Vorformwerkzeugteile ist es nicht notwendig, dass die Vorformeinheit ein austauschbares Formwerkzeug aufweist. Vielmehr lässt sich der gewünschte Formfaserquerschnitt durch die Verstellung der Vorformwerkzeugteile erreichen. Die Verstellbarkeit der Vorformwerkzeuge bietet darüber hinaus den Vorteil, dass der gewünschte Formfaserquerschnitt besonders einfach und schnell eingestellt werden kann. Weiterhin kann es vorgesehen sein, dass die Vorformeinheit ausgebildet ist, um die Vorformwerkzeuge während des Betriebs der Applikationsvorrichtung gesteuert zu verstellen.

Eine weiter vorteilhafte Ausgestaltung der Applikationsvorrichtung zeichnet sich dadurch aus, dass die Ausgabeeinheit mehrere verstellbare Ausgabeformwerkzeugteile zum Formen des Formfaserverbundstrangs aufweist, wobei die Ausgabeeinheit zum Verstellen der Ausgabeformwerkzeugteile derart steuerbar ist, um den Formfaserverbundstrang mit einem gesteuert eingestellten Ausgabequerschnitt zu formen. Um also einen gewünschten Ausgabequerschnitt einzustellen, werden die Nachformwerkzeugteile gesteuert, so dass diese derart verstellt werden, so dass mit den Nachformwerkzeugteilen der Formfaserverbundstrang mit dem gewünschten, nunmehr eingestellten Ausgabequerschnitt geformt werden kann. Vorzugsweise sind die Nachformwerkzeugteile derart steuerbar, um einen Durchlassquerschnitt der Ausgabeeinheit einzustellen. Durch die verstellbaren Nachformwerkzeugteile ist es nicht notwendig, dass die Ausgabeeinheit ein austauschbares Formwerkzeug aufweist. Vielmehr lässt sich der gewünschte Ausgabequerschnitt durch die Verstellung der Nachformwerkzeugteile erreichen. Die Verstellbarkeit der Nachformwerkzeuge bietet darüber hinaus den Vorteil, dass der gewünschte Ausgabequerschnitt besonders einfach und schnell eingestellt werden kann. Weiterhin kann es vorgesehen sein, dass die Ausgabeeinheit ausgebildet ist, um die Nachformwerkzeuge während des Betriebs der Applikationsvorrichtung gesteuert zu verstellen.

Eine weitere vorteilhafte Ausgestaltung der Applikationsvorrichtung zeichnet sich dadurch aus, dass die Applikationsvorrichtung eine Applikatorsteuereinheit aufweist, die derart zum Steuern der Vorformeinheit und/oder der Ausgabeeinheit ausgebildet ist, so dass der Formfaserquerschnitt zu mindestens 70 % mit dem Ausgabequerschnitt deckungsgleich ist. Mittels der Applikatorsteuereinheit können beispielsweise die Vorformwerkzeugteile der Vorformeinheit derart gesteuert werden, so dass der Formfaserstrang einen Formfaserquerschnitt aufweist, der zu mindestens 70 % mit dem Ausgabequerschnitt deckungsgleich ist. Alternativ oder ergänzend kann die Applikatorsteuereinheit derart ausgebildet sein, um ein Verstellen der Ausgabeformwerkzeuge derart zu steuern, so dass der Formfaserquerschnitt zu mindestens 70 % mit dem Ausgabequerschnitt deckungsgleich ist. Bevorzug ist es bevorzugt vorgesehen, dass die Applikatorsteuereinheit die Vorformeinheit in Abhängigkeit einer Einstellung der Ausgabeeinheit steuert. Wird also beispielsweise ein Ausgabequerschnitt vorgegeben, so kann die Applikatorsteuereinheit zunächst dazu ausgebildet sein, um die Ausgabewerkzeugteile derart gesteuert zu verstellen, dass der Formfaserverbundstrang den gewünschten Ausgabequerschnitt aufweist. Weiterhin kann die Applikatorsteuereinheit dazu ausgebildet sein, insbesondere im Anschluss, die Vorformeinheit zum Verstellen der Vorformwerkzeuge derart zu steuern, so dass der Formfaserstrang mit einem Formfaserquerschnitt geformt wird, der zu mindestens 70 % mit dem Ausgabequerschnitt deckungsgleich ist.

Eine weitere vorteilhafte Ausgestaltung der Applikationsvorrichtung zeichnet sich dadurch aus, dass die Applikationsvorrichtung eine Aushärtungseinheit zum Aushärten des Formfaserverbundstrangs aufweist. Die Aushärtungseinheit ist vorzugsweise der Nachformeinheit der Applikationsvorrichtung zugeordnet. Die Aushärtungseinheit kann also beispielsweise einen, insbesondere integralen, Teil der Nachformeinheit bilden. Außerdem hat es sich als vorteilhaft herausgestellt, wenn die Aushärtungseinheit als eine Heizeinheit zum Erwärmen des Formfaserverbundstrangs ausgebildet ist. Dies gilt insbesondere dann, wenn zum Imprägnieren duroplastisches Matrixmaterial verwendet wurde. Denn das duroplastische Matrixmaterial kann durch Wärmezufuhr ausgehärtet werden. Alternativ oder ergänzend kann die Aushärtungseinheit eine Belichtungseinheit aufweisen, die ausgebildet ist, ein Licht auf den Formfaserverbundstrang abzugeben, so dass der Formfaserverbundstrang aushärtet. Bei dem Licht kann es sich um Licht aus dem ultravioletten Spektrum handeln. Vorzugsweise ist das Spektrum des Lichtstrahls derart bestimmt, dass es zum Aushärten eines duroplastischen Matrixmaterials geeignet und/oder vorbestimmt ist.

Eine weitere vorteilhafte Ausgestaltung der Applikationsvorrichtung zeichnet sich dadurch aus, dass die Applikationsvorrichtung eine Erstarrungseinheit zum Erstarren des Formfaserverbundstrangs aufweist. Die Erstarrungseinheit ist vorzugsweise der Nachformeinheit der Applikationsvorrichtung zugeordnet. Die Erstarrungseinheit kann also beispielsweise einen, insbesondere integralen, Teil der Nachformeinheit bilden. Außerdem hat es sich als vorteilhaft herausgestellt, wenn die Aushärtungseinheit als Abkühlungseinheit zum Abkühlen des Formfaserverbundstrangs ausgebildet ist. Dies gilt insbesondere dann, wenn zum Imprägnieren thermoplastisches Matrixmaterial verwendet wurde. Denn das Thermoplast-Matrixmaterial kann durch Abkühlung erstarrt werden. Die Abkühlung kann beispielsweise durch Luft erfolgen. Somit kann die Abkühlungseinheit beispielsweise ein Luftgebläse aufweisen, so dass der Formfaserverbundstrang mittels der Abkühleinheit abkühlbar ist. Das Abkühlen kann jedoch auch über einen Wärmetauscher erfolgen. So kann die Abkühlungseinheit einen Wärmetauscher zum Abkühlen des Formfaserverbundstrangs aufweisen. Als Kühlmittel kann beispielsweise Wasser, Öl oder ein anderes flüssiges Kühlmittel verwendet werden.

Gemäß einem zweiten Aspekt wird die eingangs genannte Aufgabe gelöst durch ein System mit den Merkmalen des Anspruchs 9. Vorteilhafte Ausgestaltungen des Systems können aus den zugehörigen Unteransprüchen und/oder der nachfolgenden Beschreibung entnommen werden. Bezüglich des Systems gemäß dem zweiten Aspekt der Erfindung wird außerdem auf die vorangegangenen Erläuterungen, bevorzugten Ausgestaltungen, bevorzugten Merkmale, Vorteile und/oder Effekte in analoger Weise Bezug genommen, wie sie für die Applikationsvorrichtung gemäß dem ersten Aspekt der Erfindung bzw. den zugehörigen Ausgestaltungen erörtert worden sind.

Vorgesehen ist also ein System zum Ausgeben eines Formfaserverbundstrangs. Das System weist eine Applikationsvorrichtung auf, wie sie zuvor gemäß dem ersten Aspekt der Erfindung, und vorzugsweise nach einer der vorteilhaften Ausgestaltungen, erörtert worden ist. Außerdem weist das System eine Handhabungsvorrichtung auf, die ausgebildet ist, eine zugehörige Aufnahmeeinheit im Raum gesteuert zu bewegen. Darüber hinaus weist das System eine Systemsteuereinheit zur Steuerung der Handhabungsvorrichtung auf. Die Koppeleinheit der Applikationsvorrichtung ist an der Aufnahmeeinheit der Handhabungsvorrichtung befestigt, so dass die Applikationsvorrichtung mit der Handhabungsvorrichtung verbunden und von der Handhabungsvorrichtung vollständig getragen ist. Vorzugsweise ist die Systemsteuereinheit dazu konfiguriert, die Handhabungsvorrichtung derart zu steuern, dass die Aufnahmeeinheit der Handhabungsvorrichtung entlang einer vorbestimmten Trajektorie bewegt wird. So kann die Systemsteuereinheit beispielsweise derart konfiguriert sein, dass die Aufnahmeeinheit entlang einer vorbestimmten Trajektorie bewegt wird, so dass der korrespondierende Weg der Applikationsvorrichtung derart bestimmt ist, dass mittels der Applikationsvorrichtung ein Formfaserverbundstrang entlang der Trajektorie für ein herzustellendes Faserverbundbauteil geführt wird. Die Trajektorie kann dabei einem Lastpfad des herzustellenden Faserverbundbauteils entsprechen.

Die Handhabungsvorrichtung ist vorzugsweise als ein Roboter, insbesondere ein Industrieroboter, ausgebildet. Es kann auch vorgesehen sein, dass die Handhabungsvorrichtung als ein Portalroboter, insbesondere ein mittels Linearantrieben verfahrbarer Portalroboter, ausgebildet ist. Die Handhabungsvorrichtung kann auch von einem Manipulator gebildet sein oder diese aufweisen. Die Handhabungsvorrichtung kann deshalb auch als Manipulator bezeichnet werden. Außerdem hat es sich als vorteilhaft herausgestellt, wenn die Handhabungsvorrichtung eine Linearkinematik aufweist, dies gilt insbesondere im Zusammenhang mit dem Portalroboter. Die Systemsteuereinheit kann dazu konfiguriert sein, den Roboter bzw. den Portalroboter derart zu steuern, dass die Aufnahmeeinheit des Roboters bzw. des Portalroboters derart bewegt wird, um die Ausgabeeinheit der Applikationsvorrichtung entlang der Trajektorie zu führen. Bei dem Roboter kann die Aufnahmeeinheit beispielsweise am Ende eines Arms angeordnet sein. Im Übrigen ergeben sich die Vorteile und/oder Effekte in analoger Weise, wie sie im Zusammenhang mit der Applikationsvorrichtung erörtert worden sind. Auf diese wird deshalb in analoger Weise für das System Bezug genommen.

Eine vorteilhafte Ausgestaltung des Systems zeichnet sich dadurch aus, dass die Applikatorsteuereinheit der Systemsteuereinheit zugeordnet ist. Die Systemsteuereinheit kann mehrere Teileinheiten aufweisen, wobei eine dieser Teileinheiten von der Applikatorsteuereinheit gebildet ist. Somit kann die Systemsteuereinheit beispielsweise auch derart ausgebildet sein, um die Vorformeinheit und/oder die Ausgabeeinheit derart zu steuern, dass der Formfaserquerschnitt zu mindestens 70 % mit dem Ausgabequerschnitt deckungsgleich ist.

Eine weitere vorteilhafte Ausgestaltung des Systems zeichnet sich dadurch aus, dass die Applikatorsteuereinheit von der Systemsteuereinheit kontrolliert wird. Dazu können die Applikatorsteuereinheit und die Systemsteuereinheit mittels einer Signalsteuerverbindung, insbesondere einer leitungsgebundenen Signalsteuerverbindung, verbunden sein. Die Systemsteuereinheit kann beispielsweise dazu konfiguriert sein, Steuersignale an die Applikatorsteuereinheit zu senden, so dass diese die Vorformeinheit und/oder die Ausgabeeinheit derart steuert, so dass der Formfaserquerschnitt zu mindestens 70 % mit dem Ausgebequerschnitt deckungsgleich ist.

Eine weitere vorteilhafte Ausgestaltung des Systems zeichnet sich dadurch aus, dass die Applikatorsteuereinheit von der Systemsteuereinheit gebildet ist. In diesem Fall kann es vorgesehen sein, dass die Applikatorsteuereinheit nicht direkt an der Applikationsvorrichtung angeordnet ist. Außerdem kann es vorgesehen sein, dass die Applikatorsteuereinheit einen integralen Teil der Systemsteuereinheit bildet.

Außerdem wird drauf hingewiesen, dass die Vorteile, Effekte und/oder vorteilhaften Ausgestaltungen, die im Zusammenhang mit der Applikatorsteuereinheit bereits erörtert worden sind, in analoger Weise für die Systemsteuereinheit gelten können. Auf entsprechende Erläuterungen wird in analoger Weise bevorzugt Bezug genommen.

Eine vorteilhafte Ausgestaltung des Systems zeichnet sich dadurch aus, dass die Systemsteuereinheit dazu konfiguriert ist, die Antriebseinheit und/oder die Ausgabeeinheit mittels der Applikatorsteuereinheit zu steuern. Dies ist insbesondere dann von Vorteil, wenn die Systemsteuereinheit auch zur Steuerung der Handhabungsvorrichtung dient. So kann die Antriebseinheit und/oder die Ausgabeeinheit mittels der Applikationseinheit durch die Systemsteuereinheit in Abhängigkeit einer Bewegung der Handhabungsvorrichtung mittels der Systemsteuereinheit gesteuert werden.

Eine weitere vorteilhafte Ausgestaltung des Systems zeichnet sich dadurch aus, dass das System eine Aushärtungseinheit und/oder eine Erstarrungseinheit aufweist, die zum Aushärten bzw. Erstarren des Formfaserverbundstrangs ausgebildet ist. Auf entsprechende, vorteilhafte Erläuterungen, bevorzugten Merkmale, Vorteile und/oder Effekte, wie sie in Bezug auf die Aushärtungseinheit und/oder die Erstarrungseinheit der Applikationsvorrichtung erörtert wurden sind, wird in analoger Weise Bezug genommen, wobei jedoch nun eine Zuordnung der Aushärtungseinheit und/oder der Erstarrungseinheit zu dem System vorgesehen ist. Die die Aushärtungseinheit und/oder die Erstarrungseinheit können also von der Applikationsvorrichtung entkoppelt ausgebildet sein.

Gemäß einem dritten Aspekt der Erfindung wird die eingangs genannte Aufgabe gelöst durch ein Verfahren mit den Merkmalen des Anspruchs 13. Vorteilhafte Ausgestaltungen des Verfahrens sind in den zugehörigen Unteransprüchen und/oder in der nachfolgenden Beschreibung wiedergegeben.

Vorgeschlagen wird also ein Verfahren zum Ausgeben eines Formfaserverbundstrangs mittels einer Applikationsvorrichtung, die mit einer zugehörigen Koppeleinheit an einer Handhabungsvorrichtung lösbar befestigbar ist, so dass die Applikationsvorrichtung von der Handhabungsvorrichtung im Raum bewegbar ist. Gemäß einem Schritt a) des Verfahrens ist ein kontinuierliches Formen eines einer Vorformeinheit der Applikationsvorrichtung kontinuierlich zugeführten Rohfaserstrangs mit einer Vielzahl von Endlosfasern zu einem Formfaserstrang mit einem von der Vorformeinheit einstellbaren Formfaserquerschnitt vorgesehen. Ein Schritt b) des Verfahrens zeichnet sich durch ein kontinuierliches Imprägnieren des Formfaserstrangs mit einem nicht vollständig vernetzten Matrixmaterial mittels einer Imprägnierungseinheit der Applikationsvorrichtung zu einem Faserverbundstrang aus, wobei der Formfaserstrang der Imprägnierungseinheit kontinuierlich zugeführt wird. Ein Schritt c) des Verfahrens zeichnet sich durch ein kontinuierliches Pressen des einer Antriebseinheit der Applikationsvorrichtung von der Imprägnierungseinheit kontinuierlich hinzugeführten Faserverbundstrangs mittels der Antriebseinheit zu und durch eine Ausgabeeinheit der Applikationsvorrichtung aus. Gemäß einem Schritt d) des Verfahrens ist ein kontinuierliches Formen und Ausgeben des durch die Ausgabeeinheit kontinuierlich gepressten Faserverbundstrangs mittels der Ausgabeeinheit zu einem Formfaserverbundstrang mit einem von der Ausgabeeinheit einstellbaren Ausgabequerschnitt vorgesehen, wobei die Vorformeinheit und die Ausgabeeinheit derart eingestellt sind, dass der Formfaserquerschnitt zu mindestens 70 % mit dem Ausgabequerschnitt deckungsgleich ist.

Bzgl. des Verfahrens wird auf die vorangegangenen Erläuterungen, bevorzugten Ausgestaltungen, vorteilhaften Merkmale, Vorteile und/oder Effekte in analoger Weise Bezug genommen, wie sie für die Applikationsvorrichtung gemäß dem ersten Aspekt der Erfindung bzw. dem System gemäß dem zweiten Aspekt der Erfindung sowie den entsprechenden, vorteilhaften Ausgestaltungen beschrieben worden sind.

Darüber hinaus wird nochmals darauf hingewiesen, dass die zuvor beschriebenen Schritte des Verfahrens mittels der Applikationsvorrichtung ausgeführt werden, die lösbar an der Handhabungsvorrichtung befestigt ist und von dieser im Raum bewegbar ist. Das kontinuierliche Formen des Formfaserstrangs mit dem Formfaserquerschnitt, dem anschließenden Imprägnieren und dem kontinuierlichen Formen und Ausgeben des Formfaserverbundstrangs mit dem Ausgabequerschnitt erfolgt also mittels der Applikationsvorrichtung. Diese kann beispielsweise als eine mobile Applikationsvorrichtung ausgebildet sein. Dies ist insbesondere dann von Vorteil, wenn die Handhabungsvorrichtung als ein Roboter ausgebildet ist, und die Applikationsvorrichtung lösbar an einem Arm-Ende des Roboters angeordnet ist. Die Einstellung der Formfaser- und Ausgabequerschnitte erfolgt also dezentral mittels der Applikationsvorrichtung. Außerdem erfolgt die Imprägnierung mittels der Applikationsvorrichtung. Schließlich sind die beiden zuvor genannten Querschnitte vorteilhaft zueinander eingestellt, so dass eine vorteilhafte Verteilung und/oder Dichte der Fasern im Formfaserverbundstrang gewährleistet werden kann.

Eine vorteilhafte Ausgestaltung des Verfahrens zeichnet sich dadurch aus, dass die Vorformeinheit mehrere verstellbare Vorformwerkzeugteile zum Formen des Formfaserstrangs aufweist, die Vorformeinheit zum Verstellen der Vorformwerkzeuge steuerbar ist, um den Formfaserstrang mit einem gesteuert eingestellten Formfaserquerschnitt zu formen, die Ausgabeeinheit mehrere verstellbare Ausgabeformwerkzeugteile zum Formen des Formfaserverbundstrangs aufweist, die Ausgabeeinheit zum Verstellen der Ausgabeformwerkzeuge steuerbar ist, um den Formfaserverbundstrang mit einem gesteuert eingestellten Ausgabequerschnitt zu formen, und die Vorformeinheit und/oder die Ausgabeeinheit derart gesteuert wird bzw. werden, so dass der Formfaserquerschnitt zu mindestens 70% mit dem Ausgabequerschnitt deckungsgleich ist. Bezüglich der Verstellung der Vorformwerkzeugteile und der Ausgabewerkzeugteile sowie im Hinblick auf die entsprechend einstellbaren Querschnitte wird auf die zugehörigen, vorangegangen Erläuterungen, bevorzugten Ausgestaltungen, vorteilhaften Merkmalen, Vorteile und/oder Effekte in analoger Weise verweisen und Bezug genommen, wie sie im Zusammenhang mit der Applikationsvorrichtung hierzu vorteilhaft erläutert worden sind.

Eine weitere vorteilhafte Ausgestaltung des Verfahrens zeichnet sich dadurch aus, dass die Applikationsvorrichtung mit der Koppeleinheit an einer Aufnahmeeinheit befestigt ist, so dass die Applikationsvorrichtung mit der Handhabungsvorrichtung verbunden und von der Handhabungsvorrichtung vollständig getragen ist, und wobei die Applikationsvorrichtung mittels der Handhabungsvorrichtung derart durch den Raum geführt wird, dass die Ausgabeeinheit entlang eines, insbesondere vorbestimmten, Ausgabepfads geführt wird, währenddessen die Applikationsvorrichtung den Formfaserverbundstrang kontinuierlich ausgibt, so dass sich die Fasern in dem Formfaserverbundstrang zumindest im Wesentlichen knickfrei und/oder schlaufenfrei entlang des Ausgabepfads erstrecken. Vorzugsweise repräsentiert der Ausgabepfad einen Pfad entlang einer Querschnittskontur eines Abschnitts eines herzustellenden Faserverbundbauteils. Dieser Abschnitt kann sich beispielsweise auf einen geometrisch komplexen Abschnitt des herzustellenden Faserverbundbauteils beziehen. Wird der Faserverbundbauteil nun also kontinuierlich derart ausgegeben, dass sich die Fasern in dem Faserverbundstrang zumindest im Wesentlichen knickfrei und/oder schlaufenfrei entlang des Ausgabepfads erstrecken, so kann es gewährleistet werden, dass sich Reaktionskräfte ebenfalls entsprechend des Ausgabepfads verteilen. Entspricht der Ausgabepfad darüber hinaus dem Pfad entlang einer Querschnittskontur eines Abschnitts des herzustellenden Faserverbundbauteils, so können die entsprechenden Kräfte besonders vorteilhaft innerhalb des Faserverbundbauteils verteilt werden. Dies erhöht die Stabilität des herzustellenden Faserverbundbauteils.

### KURZE BESCHREIBUNG DER FIGUREN

Weitere Merkmale, Vorteile und/oder Anwendungsmöglichkeiten der vorliegenden Erfindung ergeben sich aus der nachfolgenden Beschreibung der Ausführungsbeispiele und/oder den Figuren. Dabei bilden alle beschriebenen und/oder bildlich dargestellten Merkmale für sich und/oder in beliebiger Kombination einen Gegenstand der Erfindung auch unabhängig von ihrer Zusammensetzung in den einzelnen Ansprüchen und/oder deren Rückbezügen. In den Figuren stehen weiterhin gleiche Bezugszeichen für gleiche oder ähnliche Objekte.
- Fig. 1: zeigt den schematischen Aufbau einer ersten vorteilhaften Ausgestaltung der Applikationsvorrichtung 2.
- Fig. 2: zeigt eine vorteilhafte Ausgestaltung der Handhabungsvorrichtung 4 mit einer daran lösbar befestigten Applikationsvorrichtung 2 in einer schematischen Ansicht.
- Fig. 3a, 3b, 5a, 5b: zeigen jeweils vorteilhafte Ausgestaltungen für einen Durchlassquerschnitt einer vorteilhaften Ausgestaltung der Vorformeinheit
- Fig. 4a, 4b, 6a, 6b: zeigen jeweils eine vorteilhafte Ausgestaltung für einen Durchlassquerschnitt einer vorteilhaften Ausgestaltung der Ausgabeeinheit.
- Fig. 7: zeigt eine zweite vorteilhafte Ausgestaltung der Applikationsvorrichtung in einer schematischen Ansicht.
- Fig. 8: zeigt eine dritte vorteilhafte Ausgestaltung der Applikationsvorrichtung in einer schematischen Ansicht.
- Fig. 9: zeigt eine vierte vorteilhafte Ausgestaltung der Applikationsvorrichtung in einer schematischen Ansicht.
- Fig. 10: eine vorteilhafte Ausgestaltung eines schematischen Ablaufplans des Verfahrens.

### DETAILLIERTE DARSTELLUNG EXEMPLARISCHER AUSFÜHRUNGSFORMEN

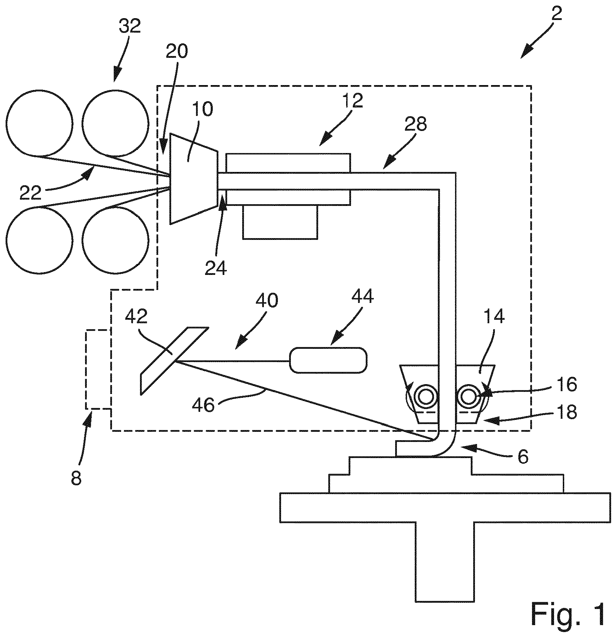

In der Figur 1 ist eine erste vorteilhafte Ausgestaltung der Applikationsvorrichtung 2 in einer schematischen Ansicht dargestellt. Die Applikationsvorrichtung 2 weist eine Koppeleinheit 8, eine Vorformeinheit 10, eine Imprägnierungseinheit 12 und eine Nachformeinheit 14 auf. Die zuvor genannten Einheiten sind direkt oder indirekt mechanisch miteinander gekoppelt oder verbunden, so dass die Applikationsvorrichtung 2 bevorzugt als eine mobile Applikationsvorrichtung 2 ausgebildet ist. Durch die gestrichelte Linie wird ein Bereich der Applikationsvorrichtung 2 vorteilhaft eingegrenzt.

Vorteilhafterweise sind die Vorformeinheit 10, die Imprägnierungseinheit 12 und die Nachformeinheit 14 unmittelbar hintereinander angeordnet und jeweils nacheinander mechanisch miteinander verbunden. Weiterhin können die zuvor genannten Einheiten mittels eines gemeinsamen Gestells (nicht dargestellt) verbunden sein.

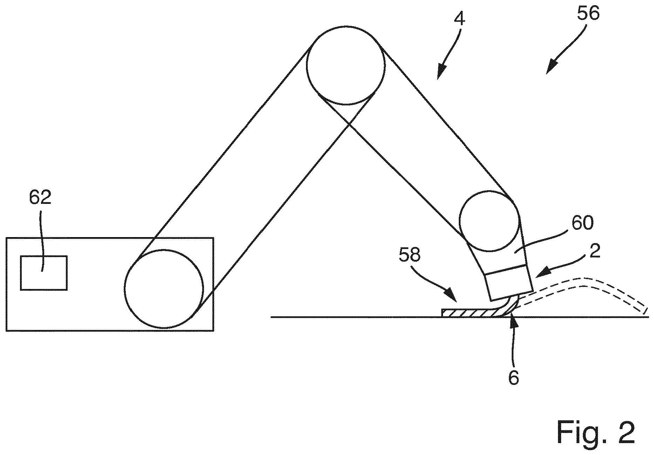

Die Applikationsvorrichtung 2 weist eine Koppeleinheit 8 auf. Sie kann ebenfalls mit den anderen Einheiten und/oder dem Gestell verbunden sein. Mittels der Koppeleinheit 8 ist die Applikationsvorrichtung 2 an einer Handhabungsvorrichtung 4, wie sie beispielsweise in der Figur 2 schematisch dargestellt ist, lösbar befestigt oder daran befestigbar. Sofern die Applikationsvorrichtung 2 mittels der Koppeleinheit 8 an der Handhabungsvorrichtung 4 befestigt ist, kann die Applikationsvorrichtung 2 von der Handhabungsvorrichtung 4 im Raum bewegt werden. Insbesondere kann sie im Raum frei bewegt werden.

Die Applikationsvorrichtung 2 dient zum Ausgeben eines Formfaserverbundstrangs 6. Der Formfaserverbundstrang 6 weist ein Matrixmaterial auf, in das Fasern eingebracht sind. Ein derartiger Formfaserverbundstrang 6 dient dazu, zumindest einen Teil eines Faserverbundbauteils 58 zu bilden. Faserverbundbauteile 58 werden in der Praxis nicht selten mit hohen Kräften beansprucht und/oder unterliegen hohen Anforderungen hinsichtlich ihrer geometrischen Form und/oder eines möglichst geringen Gewichts. Wird nun also ein Formfaserverbundstrang 6 zur Herstellung eines Faserverbundbauteils 58 mit einer geometrisch komplexen Form verwendet, wobei das herzustellende Faserverbundbauteil 58 besonders hohen Kräften ausgesetzt sein soll, ist es von hohem Interesse, dass die Fasern in dem Faserverbundstrang 6 in einer vorhersagbaren Verteilung und/oder Menge angeordnet sind.

Um die zuvor genannten Anforderungen besonders vorteilhaft zu gewährleisten, weist die Applikationsvorrichtung 2 die Vorformeinheit 10, die Imprägnierungseinheit 12 und die Nachformeinheit 14 auf, wobei die Nachformeinheit 14 wiederum eine Antriebseinheit 16 und eine einstellbare Ausgabeeinheit 18 aufweist.

Dabei ist die Vorformeinheit 10 ausgebildet, einen der Vorformeinheit 10 kontinuierlich zugeführten Rohfaserstrang 20 mit einer Vielzahl von Endlosfasern 22 kontinuierlich zu einem Formfaserstrang 24 mit einem von der Vorformeinheit 10 einstellbaren Formfaserquerschnitt 26 zu formen. Die Vorformeinheit 10 ist deshalb vorzugsweise als eine einstellbare Vorformeinheit 10 ausgebildet. Die Endlosfasern 22 können von Faserrollen 32 abgerollt werden. Diese Faserrollen 32 können von der Applikationsvorrichtung 2 gehalten sein. Es ist jedoch auch möglich, dass die Faserrollen 32 nicht der Applikationsvorrichtung 2 zugeordnet sind. In diesem Fall können die Faserrollen 32 beispielsweise stationär oder an der Handhabungsvorrichtung 4 angeordnet sein. In diesem Fall können die Endlosfasern 22 von der Handhabungsvorrichtung 4 zu der Applikationsvorrichtung 2 bzw. der zugehörigen Vorformeinheit 10 geführt sein.

Bei den Endlosfasern 22 handelt es sich vorzugsweise um Kohlenstofffasern, Glasfasern oder Aramidfasern. Für die Endlosfasern 22 sind jedoch auch Hybridfasern denkbar, die mehrere unterschiedliche Fasertypen aufweist, wie beispielsweise Kohlenstofffasern und Glasfasern. Endlosfasern 22 zeichnen sich außerdem durch eine mittlere Faserlänge von mehr als 80 mm, mehr als 120 mm oder mehr als 200 mm aus. Im Betrieb der Applikationsvorrichtung 2 wird der Rohfaserstrang 20 aus der Vielzahl der Endlosfasern 22 ununterbrochen bzw. kontinuierlich der Vorformeinheit 10 zugeführt. Dabei kann es vorgesehen sein, dass der Rohfaserstrang 20 durch die Vorformeinheit 10 hindurchgezogen wird.

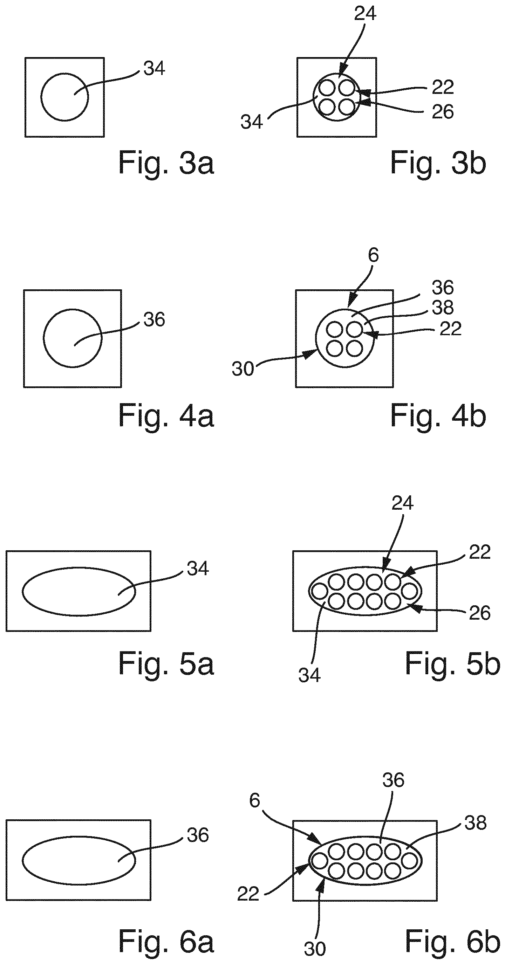

Die Vorformeinheit 10 ist außerdem ausgebildet, den Formfaserstrang 24 aus dem Rohfaserstrang 20 zu formen, so dass der Formfaserstrang 24 einen Formfaserquerschnitt 26 aufweist. Die Vorformeinheit 10 kann dazu einen Durchlassquerschnitt 34 aufweisen, wie dieser schematisch in Figur 3a oder 5a dargestellt ist. Wird nun der Rohfaserstrang 20 mit der Vielzahl der Endlosfasern 22 durch die Vorformeinheit 10 geführt, so formt die Vorformeinheit 10 den Rohfaserstrang, beispielsweise durch radiales Zusammenpressen und/oder Lenken der Endlosfasern 22, so dass der entstehende Formfaserstrang 24, wie dieser beispielsweise in der Figur 3b bzw. 5b schematisch dargestellt ist, einen Formfaserquerschnitt 26 aufweist. Der Formfaserstrang 24 weist also ebenfalls die Vielzahl der Endlosfasern 22 auf, jedoch sind diese nunmehr derart zusammengedrückt und/oder derart in Radialrichtung verändert zueinander angeordnet, dass der gewünschte Formfaserquerschnitt 26 erreicht wird.

Darüber hinaus ist die Vorformeinheit 10 einstellbar ausgestaltet, so dass die Vorformeinheit 10 ausgebildet ist, den Formfaserstrang 24 mit einem von der Vorformeinheit 10 einstellbaren Formfaserquerschnitt 26 zu formen. Dazu kann für die Vorformeinheit 10 ein erstes, austauschbares Formwerkzeug verwendet werden. Durch die Wahl des ersten Formwerkzeugs kann der gewünschte Formfaserquerschnitt 26 eingestellt werden. Denn durch die Wahl des ersten Formwerkzeugs kann beispielsweise der Durchlassquerschnitt 34 eingestellt werden. In der Figur 5a ist beispielsweise ein anderer Durchlassquerschnitt 34 für die Vorformeinheit 10 dargestellt als in Figur 3a. Diese unterschiedlichen Durchlassquerschnitte 34 können also von unterschiedlichen ersten Formwerkzeugen für die Vorformeinheit 10 bereitgestellt werden. Soll beispielsweise ein erstes Formwerkzeug mit dem in Figur 5a dargestellten Durchlassquerschnitt 34 verwendet werden, so ist es bei dem Betrieb der Applikationsvorrichtung 2 von Vorteil, wenn eine höhere Vielzahl von Endlosfasern 22 verwendet wird, so dass aus dem entsprechenden Rohfaserstrang 20 der Formfaserstrang 24 mit dem gewünschten Formfaserquerschnitt 26 formbar ist, wie es in Figur 5b schematisch dargestellt ist.

Anstatt ein erstes Formwerkzeug für die Vorformeinheit 10 zur Einstellung des Formfaserquerschnitts 26 zu verwenden, kann es vorgesehen sein, dass die Vorformeinheit 10 mehrere verstellbare Vorformwerkzeugteile zum Formen des Formfaserstrangs 24 aufweist. Die Vorformwerkzeugteile können vorzugsweise derart verstellbar sein, dass je nach Einstellung ein unterschiedlicher Durchlassquerschnitt 34 erreichbar ist. So können die Vorformwerkzeugteile beispielsweise derart verstellt werden, dass sie einen Durchlassquerschnitt 34 formen, wie dieser in der Figur 3a oder in der Figur 5a gezeigt ist. Außerdem ist die Vorformeinheit 10 vorzugsweise zum Verstellen der Vorformwerkzeugteile derart steuerbar, um den Formfaserstrang 24 mit dem nunmehr gesteuert eingestellten Formfaserquerschnitt 26 zu formen.

Während des Betriebs der Applikationsvorrichtung 2 wird der Formfaserstrang 24 kontinuierlich von der Vorformeinheit 10 zu der Imprägnierungseinheit 12 geführt. Die Imprägnierungseinheit 12 ist ausgebildet, den kontinuierlich zugeführten Formfaserstrang 24 mit einem nicht vollständig vernetzten Matrixmaterial zu imprägnieren, so dass ein Faserverbundstrang 28 kontinuierlich ausgebildet wird. Bei der in Figur 1 dargestellten Ausgestaltungsvariante der Applikationsvorrichtung 2 ist es vorgesehen, dass der Formfaserstrang 24 durch eine Injektions-Imprägnierung mit dem nicht vollständig vernetzten Matrixmaterial kontinuierlich zu dem Faserverbundstrang 28 ausgebildet wird. Dabei kann das nicht vollständig vernetzte Matrixmaterial auf den Formfaserstrang 24 gesprüht oder gespritzt werden. Dies bietet den Vorteil, dass der gebildete Faserverbundstrang 28 zumindest im Wesentlichen einen ähnlichen Faserverbundquerschnitt aufweist, wie der Formfaserstrang 24.

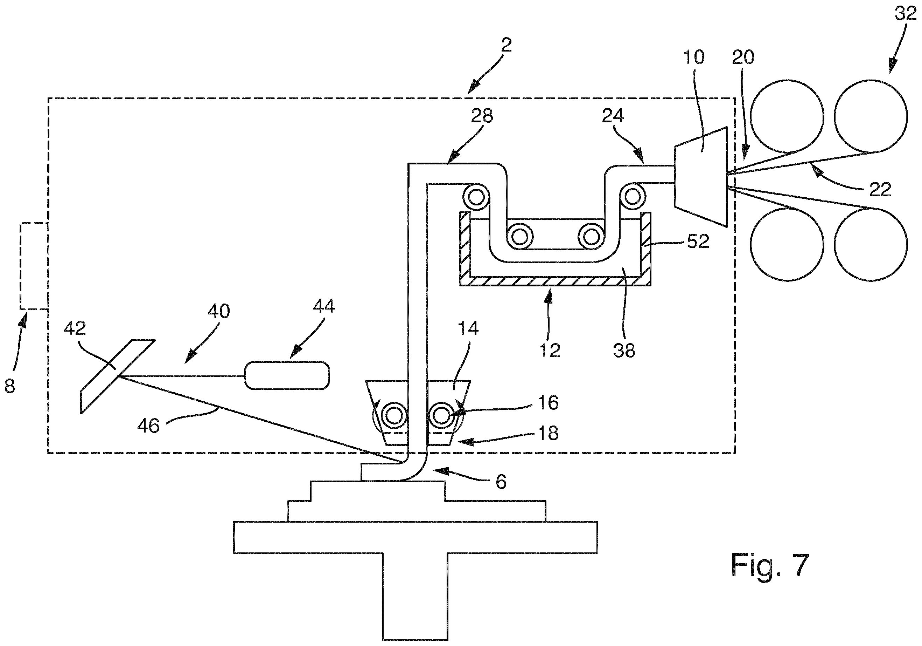

Anstatt der Imprägnierungseinheit 12, wie sie schematisch in der Figur 1 dargestellt ist, kann die Imprägnierungseinheit 12 auch anders ausgestaltet sein. In der Figur 7 wird beispielsweise die zumindest im Wesentlichen gleiche Applikationsvorrichtung 2 schematisch dargestellt, wobei die Imprägnierungseinheit 12 jedoch ausgebildet ist, den Formfaserstrang 24 kontinuierlich durch ein wannenförmiges Gefäß mit dem nicht vollständig vernetzten Matrixmaterial zu führen, um die Imprägnierung zu erreichen und somit den Faserverbundstrang 28 auszubilden.

Sowohl für die Injektions-Imprägnierungseinheit 12, wie sie in der Figur 1 schematisch dargestellt ist, als auch die Ausgestaltungsvariante der Imprägnierungseinheit 12, wie sie schematisch in der Figur 7 dargestellt ist, wird ein fließfähiges, nicht vollständig vernetztes Matrixmaterial verwendet. Hierbei handelt es sich beispielsweise um noch nicht vollständig vernetztes duroplastische Matrixmaterial.

Die Applikationsvorrichtung 2, wie sie beispielsweise in der Figur 1 dargestellt ist, weist außerdem die Nachformeinheit 14 auf. Die Nachformeinheit 14 umfasst eine Antriebseinheit 16 und eine einstellbare Ausgabeeinheit 18 auf. Die Antriebseinheit 16 ist ausgebildet, den von der Imprägnierungseinheit 12 kontinuierlich zugeführten Faserverbundstrang 28 kontinuierlich zu und durch die Ausgabeeinheit 18 zu pressen. Außerdem ist die Antriebseinheit 16 vorzugsweise derart ausgebildet, um den Faserverbundstrang 28 von der Imprägnierungseinheit 12 zu der Antriebseinheit 16 zu ziehen. Entsprechende Zugkräfte wirken sich in rückwärtiger Prozessrichtung deshalb auch auf den Rohfaserstrang 20 und die Endlosfasern 22 aus. Mit anderen Worten kann die Antriebseinheit 16 dazu ausgebildet sein, die unterschiedlichen Teilabschnitte bzw. Stränge 20, 24, 28 zu fördern.

Die Ausgabeeinheit 18 ist ausgebildet, den durch die Ausgabeeinheit 18 kontinuierlich gepressten Faserverbundstrang 28 kontinuierlich zu dem Formfaserverbundstrang 6 zu formen und auszugeben. Die Ausgabeeinheit 18 weist dabei vorzugsweise einen Durchlassquerschnitt 36 auf. Dieser ist schematisch in Figur 4a oder 6a dargestellt. In einer beispielhaften Ausgestaltung entspricht der Durchlassquerschnitt 36 der Ausgabeeinheit 18 zumindest im Wesentlichen dem Durchlassquerschnitt 34 der Vorformeinheit 10.

Darüber hinaus ist die Ausgabeeinheit 18 einstellbar ausgestaltet, so dass die Ausgabeeinheit 18 ausgebildet ist, den Formfaserverbundstrang 6 mit einem von der Ausgabeeinheit 18 einstellbaren Ausgabequerschnitt 30 zu formen. Dazu kann für die Ausgabeeinheit 18 ein erstes, austauschbares Formwerkzeug verwendet werden. Durch die Wahl des ersten Formwerkzeugs kann der gewünschte Ausgabequerschnitt 30 eingestellt werden. Anstatt ein erstes Formwerkzeug für die Ausgabeeinheit 18 zur Einstellung des Ausgabequerschnitts 30 zu verwenden, kann es vorgesehen sein, dass die Ausgabeeinheit 18 mehrere verstellbare Ausgabeformwerkzeugteile zum Formen des Formfaserverbundstrangs 6 aufweist. Die Ausgabeformwerkzeugteile können vorzugsweise derart verstellbar sein, dass je nach Einstellung ein unterschiedlicher Durchlassquerschnitt 36 erreichbar ist.

Wird der Faserverbundstrang 28 nun kontinuierlich durch die Ausgabeeinheit 28 gepresst, so wird der dabei entstehende Formfaserverbundstrang 6 einen Ausgabequerschnitt 30 aufweisen, wie es schematisch in Figur 4b bzw. 6b gezeigt ist. Der Faserverbundstrang 6 weist die Endlosfasern 22 und das Matrixmaterial 38 auf. Diese füllen den Durchlassquerschnitt 36 voll aus. Da die Endlosfasern 22 zuvor mittels der Vorformeinheit 10 zu dem Rohfaserstrang 20 geformt wurden, wobei die Vorformeinheit 10 einen Durchlassquerschnitt 34 aufweist, der ähnlich oder sogar gleich zu dem Durchlassquerschnitt 36 der Ausgabeeinheit 18 ist, wird der vorteilhafte Effekt erreicht, dass die Verteilung der Endlosfasern 22 über den Ausgabequerschnitt 30 gleich oder ähnlich zu der Verteilung der Endlosfasern 22 in Bezug auf den Rohfaserstrang 20 sind. Es ist deshalb vorgesehen, dass die Vorformeinheit 10 und die Ausgabeeinheit 18 derart eingestellt sind, dass der Formfaserquerschnitt 26 zu mindestens 70 % mit dem Ausgabequerschnitt 30 deckungsgleich ist. Dies bietet den Vorteil, dass die Anordnung der Endlosfasern 22 über dem Formfaserquerschnitt 26 nur wenig Veränderung unterliegen in Bezug auf die entsprechende Verteilung der Endlosfasern 22 in dem Ausgabequerschnitt 30.

Mittels der Applikationsvorrichtung 2 kann gewährleistet werden, dass ein Formfaserverbundstrang 6 bereitgestellt wird, der eine vorteilhafte und/oder zumindest im Wesentlichen vorbestimmbare Verteilung von Fasern über den zugehörigen Querschnitt aufweist. Wird ein derartiger Formfaserverbundstrang 6 zur Herstellung eines Faserverbundbauteils 58 verwendet, so kann das Faserverbundbauteil 58 geometrisch komplexe Formabschnitte aufweisen, die gleichzeitig besonders formstabil und/oder belastbar sind. Denn basierend auf der vorteilhaften Verteilung der Fasern 22 in dem Formfaserverbundstrang 6 kann entsprechendes auch für das herzustellende Faserverbundbauteil 58 gelten, so dass die darin besonders vorteilhaft verteilt angeordneten Fasern die Weiterleitung von einwirkenden Kräften besonders vorteilhaft gewährleisten.

Für die Applikationsvorrichtung 2 kann es weiterhin vorgesehen sein, dass diese eine Aushärtungseinheit aufweist. Die Aushärtungseinheit kann dazu dienen, um den Formfaserverbundstrang 6 auszuhärten. In einer vorteilhaften Ausgestaltung weist die Applikationsvorrichtung 2 dazu eine Heizeinheit auf, die zumindest einen Teil der Aushärtungseinheit bildet. Die Heizeinheit kann auch die vollständige Aushärtungseinheit bilden. Die Heizeinheit ist zum Erwärmen des Formfaserverbundstrangs 6 ausgebildet. So kann die Heizeinheit beispielsweise der Nachformeinheit 14 zugeordnet sein. Verlässt der Formfaserverbundstrang 6 die Applikationseinheit 2, so kann der Formfaserverbundstrang 6 zuvor mittels der Heizeinheit erwärmt worden sein, was sodann, insbesondere während der Ablage des Formfaserverbundstrangs 6, zum Aushärten des Formfaserverbundstrangs 6 führt. Dies gilt insbesondere dann, wenn das nicht vollständig vernetzte Matrixmaterial, das zur Herstellung des Faserverbundstrangs 28 verwendet wurde, als ein duroplastisches Matrixmaterial ausgebildet ist.

Alternativ oder ergänzend kann die Aushärtungseinheit der Applikationsvorrichtung 2 eine Belichtungseinheit 40 aufweisen. Die Belichtungseinheit 40 ist dazu ausgebildet, Licht mit einem Wellenlängenspektrum an den Formfaserverbundstrang 6 zu lenken, so dass der Formfaserverbundstrang 6 aushärtet. Vorzugsweise ist das Lichtspektrum derart gewählt, dass das Matrixmaterial des Formfaserverbundstrangs 6 aushärtet. Besonders bevorzugt handelt es sich bei dem Licht um Licht aus dem ultravioletten Spektrum. So kann für die Belichtungseinheit ein UV-Laser 44 verwendet werden, der UV-Licht abgibt. Dieses UV-Licht kann sodann auf den Formfaserverbundstrang 6 gelenkt werden. Dabei kann das Lenken des Lichts derart erfolgen, dass es gezielt auf den ausgegebenen Formfaserverbundstrang 6 gerichtet ist. Dies kann vorzugsweise mit Hilfe eines Umlenkspiegels 42 der Belichtungseinheit 40 erfolgen. Der UV-Laser 44 zur Generierung des UV-Lichts kann ebenfalls der Beleuchtungseinheit 40 zugeordnet sein. Ein entsprechender Laserstrahl 46 wird von dem UV-Laser 44 zunächst auf einen Spiegel 42 und sodann auf den Formfaserverbundstrang 6 gerichtet.

Grundsätzlich ist es möglich, dass die Belichtungseinheit 40 mit der Applikationsvorrichtung 2 gekoppelt ist. Dies ist jedoch nicht notwendigerweise der Fall. So kann die Belichtungseinheit 40 stationär angeordnet sein oder der Handhabungsvorrichtung 4 zugeordnet sein. Die zuvor erläuterten, vorteilhaften Ausgestaltungen, vorteilhaften Merkmale und/oder Effekte gelten sodann in analoger Weise.

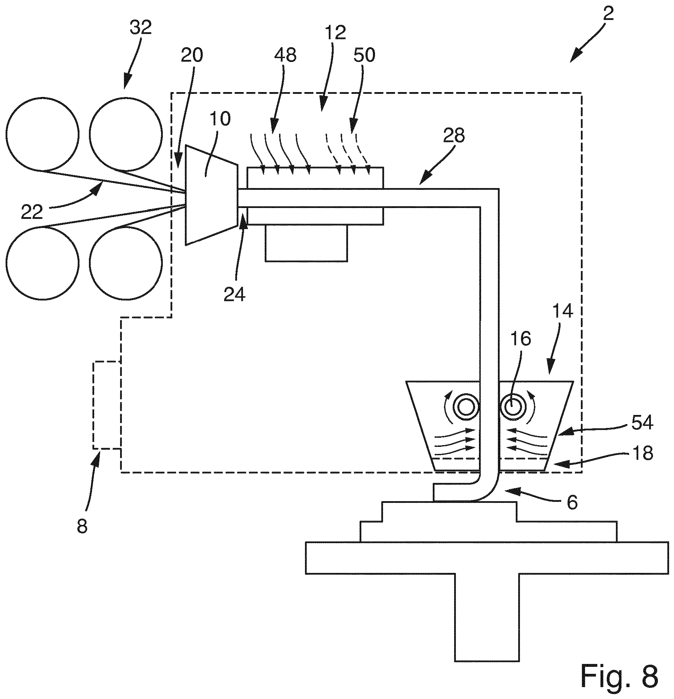

Zuvor wurde erläutert, dass zur Imprägnierung vorzugsweise ein nicht vollständig vernetztes, duroplastisches Matrixmaterial Anwendung finden kann. Die Verwendung eines duroplastischen Matrixmaterials ist jedoch nicht einschränkend zu verstehen. Denn besonders bevorzugt kann das nicht vollständig vernetzte Matrixmaterial als ein thermoplastisches Matrixmaterial ausgebildet sein, das auch als Thermoplast-Matrixmaterial bezeichnet wird. In der Figur 8 ist die zuvor erläuterte Applikationsvorrichtung 2, wie sie im Zusammenhang mit der Figur 1 erläutert worden ist, dargestellt, wobei jedoch die Imprägnierungseinheit 12 zur Imprägnierung der Fasern mit einem nicht vollständig vernetzten, thermoplastischen Matrixmaterial ausgebildet ist. Die Imprägnierungseinheit 12 kann dazu eine Erwärmungseinheit 48 und eine Abkühleinheit 50 aufweisen. Die Erwärmungseinheit 48 kann dazu ausgebildet sein, um das thermoplastische Matrixmaterial zu erwärmen, so dass es fließfähig ist und somit dazu dienen kann, den Formfaserstrang mit dem thermoplastischen Matrixmaterial zu Imprägnieren. Ist dies erfolgt, kann der mit dem thermoplastischen Matrixmaterial imprägnierte Formfaserstrang abgekühlt werden, so dass sodann der Faserverbundstrang 28 gebildet wird.

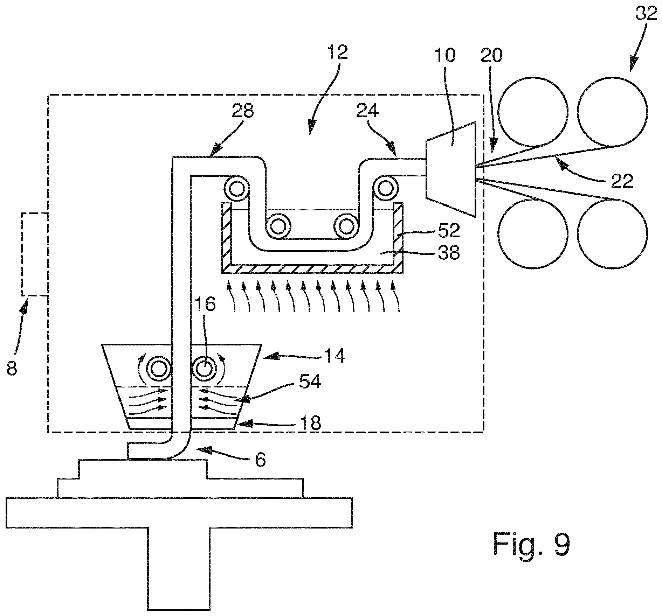

Eine weitere Ausgestaltungsvariante der Imprägnierungseinheit 12, die ebenfalls zur Imprägnierung des Formfaserstrangs 24 mit thermoplastischen Matrixmaterial ausgebildet ist, ist schematisch in der Figur 9 dargestellt. Hierbei handelt es sich um ein wannenförmiges Gefäß 52, in das thermoplastisches Matrixmaterial 38 eingegeben ist. Außerdem ist die Imprägnierungseinheit 12 dazu ausgebildet, das thermoplastische Matrixmaterial 38 in dem wannenförmigen Gefäß 52 derart zu erwärmen, dass dieses fließfähig ist. Wie zuvor im Zusammenhang mit der Figur 7 erläutert, wird der Formfaserstrang 24 durch das wannenförmige Gefäß 52 mit dem Matrixmaterial 38 geführt, so dass dabei die Imprägnierung entsteht.

Für die Ausgabeeinheit 14 kann darüber hinaus eine weitere Erwärmungseinheit 54 vorgesehen sein. Die weitere Erwärmungseinheit 54 kann integral mit der Nachformeinheit 14 ausgebildet sein. Die weitere Erwärmungseinheit 54 ist vorzugsweise dazu ausgebildet, um den durch die Ausgabeeinheit 18 gepressten Faserverbundstrang zu erwärmen, so dass dieser den gewünschten Formfaserquerschnitt 26 erreicht und damit der Formfaserverbundstrang 6 gebildet und ausgegeben werden kann.

Darüber hinaus kann der Applikationsvorrichtung 2 eine weitere Kühleinheit zugeordnet sein, um den aus der Imprägnierungseinheit 12 kommenden Faserverbundstrang 28 abzukühlen. Außerdem kann der Applikationsvorrichtung 2 eine weitere Abkühleinheit zugeordnet sein, um den Formfaserverbundstrang 6 abzukühlen. Die oder jede Abkühleinheit kann als eine Luftgebläseeinheit ausgebildet sein, die dazu ausgebildet ist, Kühlluft auf den Formfaserverbundstrang 6 bzw. den Faserverbundstrang 28 zu richten. Andere Kühleinheiten, die beispielsweise mit einem flüssigen Kühlmittel, wie Öl, betrieben werden, sind jedoch grundsätzlich auch denkbar. So kann jede Kühleinheit einen Wärmetauscher aufweisen, der an einen Kühlkreislauf angeschlossen. Somit kann eine der Kühleinheiten zum Abkühlen des Faserverbundstrangs 28 ausgebildet sein, insbesondere so dass das zugehörige thermoplastische Matrixmaterial erstarrt. Außerdem kann die andere Kühleinheit zum Abkühlen des Formfaserverbundstrangs 6 ausgebildet, insbesondere so dass das zugehörige thermoplastische Matrixmaterial erstarrt.

Schließlich wird nochmals auf Figur 2 verwiesen, in der eine vorteilhafte Ausgestaltung des Systems 56 dargestellt ist. Das System 56 dient zur Herstellung eines Faserverbundbauteils 58. Das System 56 weist eine Handhabungsvorrichtung 4 auf. Die Handhabungsvorrichtung 4 kann beispielsweise als ein Roboter ausgebildet sein. Außerdem weist das System 56 eine Applikationsvorrichtung 2 auf. Diese Applikationsvorrichtung 2 kann entsprechend einer der zuvor erläuterten Ausgestaltungen ausgebildet sein. Auf die vorangegangenen Erläuterungen wird deshalb bevorzug Bezug genommen. Die Applikationsvorrichtung 2 ist mit ihrer zugehörigen Koppeleinheit 8 an einer Aufnahmeeinheit 60 der Handhabungsvorrichtung 4 befestigt. Die Aufnahmeeinheit 60 ist vorzugsweise als ein armseitiger Endabschnitt der Handhabungsvorrichtung 4 ausgebildet. Sofern die Handhabungsvorrichtung 4 als ein Roboterarm ausgebildet ist, kann die Aufnahmeeinheit 60 also an dem Armende des Roboterarms ausgebildet sein. Die Handhabungsvorrichtung 4 ist dazu ausgebildet, die zugehörige Aufnahmeeinheit 60 im Raum gesteuert zu bewegen. Außerdem wird die Applikationsvorrichtung 2 vollständig von der Handhabungsvorrichtung 4 getragen. Im Betrieb des Systems 56 kann somit ein Formfaserverbundstrang 6 von der Applikationsvorrichtung 2 ausgegeben werden, der sodann einen Abschnitt des herzustellenden Faserverbundbauteils 58 bildet. Da die Applikationsvorrichtung 2 mittels der Handhabungsvorrichtung 4 frei im Raum bewegbar ist, können mehrere Abschnitte des herzustellenden Faserverbundbauteils 58 nacheinander mittels der Applikationsvorrichtung 2 hergestellt werden, so dass schließlich das gesamte Faserverbundbauteil 58 gebildet wird. Hierzu kann das System 56 ausgebildet und/oder die zugehörige Systemsteuereinheit konfiguriert sein. Indem die Applikationsvorrichtung 2 frei im Raum bewegbar ist, können auch Faserverbundbauteile 58 mit einer komplexen geometrischen Struktur hergestellt werden.

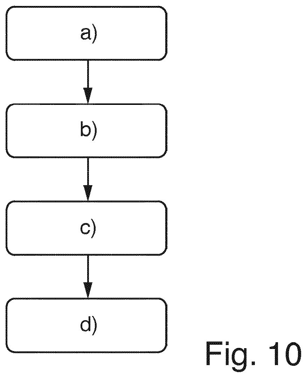

In der Figur 10 ist eine beispielhafte Ausgestaltung des Verfahrens zum Ausgeben eines Faserverbundstrangs 6 mittels einer Applikationsvorrichtung 2 dargestellt, wobei die Applikationsvorrichtung 2 mit einer zugehörigen Koppeleinheit 8 an einer Handhabungsvorrichtung 4 lösbar befestigbar ist, so dass die Applikationsvorrichtung 2 von der Handhabungsvorrichtung 4 im Raum bewegbar ist.

Nach einem ersten Schritt a) des Verfahrens ist ein kontinuierliches Formen eines einer Vorformeinheit 10 der Applikationsvorrichtung 2 kontinuierlich zugeführten Rohfaserstrangs 20 mit einer Vielzahl von Endlosfasern 22 zu einem Formfaserstrang 24 mit einem von der Vorformeinheit 10 einstellbaren Formfaserquerschnitt 26 vorgesehen. Gemäß einem zweiten Schritt b) des Verfahrens ist ein kontinuierliches Imprägnieren des Formfaserstrangs 24 mit einem nicht vollständig vernetzten Matrixmaterial 38 mittels einer Imprägnierungseinheit 12 der Applikationsvorrichtung 2 zu einem Faserverbundstrang 28 vorgesehen, wobei der Formfaserstrang 24 der Imprägnierungseinheit 12 kontinuierlich zugeführt wird. Gemäß einem dritten Schritt c) ist ein kontinuierliches Pressen des einer Antriebseinheit 14 der Applikationsvorrichtung 2 von der Imprägnierungseinheit 12 kontinuierlich zugeführten Faserverbundstrangs 28 mittels der Antriebseinheit 16 zu und durch eine Ausgabeeinheit 18 der Applikationsvorrichtung 2 vorgesehen. Gemäß einem vierten Schritt d) des Verfahrens ist ein kontinuierliches Formen und Ausgeben des durch die Ausgabeeinheit 18 kontinuierlich gepressten Faserverbundstrangs 28 mittels der Ausgabeeinheit 18 zu einem Formfaserverbundstrang 6 mit einem von der Ausgabeeinheit 18 einstellbaren Ausgabequerschnitt 30 vorgesehen, wobei die Vorformeinheit 10 und die Ausgabeeinheit 18 derart einstellbar sind, dass der Formfaserquerschnitt 26 zu mindestens 70 % mit dem Ausgabequerschnitt 30 deckungsgleich ist.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Applikationsvorrichtung (2) für eine Handhabungsvorrichtung (4) und zum Ausgeben eines Formfaserverbundstrangs (6), aufweisend:
eine Koppeleinheit (8), mittels der die Applikationsvorrichtung (2) an der Handhabungsvorrichtung (4) lösbar befestigbar ist, so dass die Applikationsvorrichtung (2) von der Handhabungsvorrichtung (4) im Raum bewegbar ist;
eine Vorformeinheit (10);
eine Imprägnierungseinheit (12); und
eine Nachformeinheit (14) mit einer Antriebseinheit (16) und einer einstellbaren Ausgabeeinheit (18);
wobei die Vorformeinheit (10) ausgebildet ist, einen der Vorformeinheit (10) kontinuierlich zugeführten Rohfaserstrang (20) mit einer Vielzahl von Endlosfasern (22) kontinuierlich zu einem Formfaserstrang (24) mit einem von der Vorformeinheit (10) einstellbaren Formfaserquerschnitt (26) zu formen;
wobei die Imprägnierungseinheit (12) ausgebildet ist, aus dem von der Vorformeinheit (10) kontinuierlich zugeführten Formfaserstrang (24) durch Imprägnierung mit einem nicht vollständig vernetzten Matrixmaterial (38) kontinuierlich zu einem Faserverbundstrang (28) auszubilden;
wobei die Antriebseinheit (16) der Nachformeinheit (14) ausgebildet ist, den von der Imprägnierungseinheit (12) kontinuierlich zugeführten Faserverbundstrang (28) kontinuierlich zu und durch die Ausgabeeinheit (18) zu pressen;
wobei die Ausgabeeinheit (18) ausgebildet ist, einen durch die Ausgabeeinheit (18) kontinuierlich gepressten Faserverbundstrang (28) kontinuierlich zu einem Formfaserverbundstrang (6) mit einem von der Ausgabeeinheit (18) einstellbaren Ausgabequerschnitt (30) zu formen und auszugeben; und
wobei die Vorformeinheit (10) und die Ausgabeeinheit (18) derart eingestellt sind, dass der Formfaserquerschnitt (26) zu mindestens 70% mit dem Ausgabequerschnitt (30) deckungsgleich ist.

2. Applikationsvorrichtung (2) nach dem vorhergehenden Anspruch, **dadurch gekennzeichnet, dass** die Vorformeinheit (10) eine erste Werkzeugaufnahme und ein erstes, austauschbar von der ersten Werkzeugaufnahme gehaltenes Formwerkzeug aufweist, wobei der Formfaserquerschnitt (26) von dem ersten Formwerkzeug bestimmt ist.

3. Applikationsvorrichtung (2) nach einem der vorhergehenden Ansprüche, **dadurch gekennzeichnet, dass** die Ausgabeeinheit (18) eine zweite Werkzeugaufnahme und ein zweites, austauschbar von der zweiten Werkzeugaufnahme gehaltenes Formwerkzeug aufweist, wobei der Ausgabequerschnitt (30) von dem zweiten Formwerkzeug bestimmt ist.

4. Applikationsvorrichtung (2) nach Anspruch 3, **dadurch gekennzeichnet, dass** das erste Formwerkzeug und das zweite Formwerkzeug derart zueinander bestimmt und/oder ausgebildet sind, so dass der Formfaserquerschnitt (26) zu mindestens 70% mit dem Ausgabequerschnitt (30) deckungsgleich ist.

5. Applikationsvorrichtung (2) nach einem der vorhergehenden Ansprüche, **dadurch gekennzeichnet, dass** die Vorformeinheit (10) mehrere verstellbare Vorformwerkzeugteile zum Formen des Formfaserstrangs (24) aufweist, wobei die Vorformeinheit (10) zum Verstellen der Vorformwerkzeugteile derart steuerbar ist, um den Formfaserstrang (24) mit einem gesteuert eingestellten Formfaserquerschnitt (26) zu formen.

6. Applikationsvorrichtung (2) nach einem der vorhergehenden Ansprüche, **dadurch gekennzeichnet, dass** die Ausgabeeinheit (18) mehrere verstellbare Ausgabeformwerkzeugteile zum Formen des Formfaserverbundstrangs (6) aufweist, wobei die Ausgabeeinheit (18) zum Verstellen der Ausgabeformwerkzeugteile derart steuerbar ist, um den Formfaserverbundstrang (6) mit einem gesteuert eingestellten Ausgabequerschnitt (30) zu formen.

7. Applikationsvorrichtung (2) nach einem der vorhergehenden Ansprüche, **dadurch gekennzeichnet, dass** die Applikationsvorrichtung (2) eine Applikatorsteuereinheit aufweist, die derart zum Steuern der Vorformeinheit (10) und/oder der Ausgabeeinheit (18) ausgebildet ist, so dass der Formfaserquerschnitt (26) zu mindestens 70% mit dem Ausgabequerschnitt (30) deckungsgleich ist.

8. Applikationsvorrichtung (2) nach einem der vorhergehenden Ansprüche, **dadurch gekennzeichnet, dass** die Applikationsvorrichtung (2) eine Aushärtungseinheit zum Aushärten, insbesondere Erwärmungseinheit (48) zum Erwärmen, des Formfaserverbundstrangs (6) aufweist oder eine Erstarrungseinheit (50) zum Erstarren des Formfaserverbundstrangs (6) aufweist.

9. System zum Ausgeben eines Formfaserverbundstrangs (6), aufweisend:
eine Applikationsvorrichtung (2) nach einem der vorhergehenden Ansprüche,
eine Handhabungsvorrichtung (4), die ausgebildet ist, eine zugehörige Aufnahmeeinheit (60) im Raum gesteuert zu bewegen, und
eine Systemsteuereinheit (62) zur Steuerung der Handhabungsvorrichtung (4);
wobei die Koppeleinheit (8) an der Aufnahmeeinheit (60) befestigt ist, so dass die Applikationsvorrichtung (2) mit der Handhabungsvorrichtung (4) verbunden und von der Handhabungsvorrichtung (4) vollständig getragen ist.

10. System nach dem vorhergehenden Anspruch, **dadurch gekennzeichnet, dass** die Applikatorsteuereinheit der Systemsteuereinheit (62) zugeordnet, von der Systemsteuereinheit (62) kontrolliert und/oder von der Systemsteuereinheit (62) gebildet ist.

11. System nach einem der vorhergehenden Ansprüche 9 bis 10, **dadurch gekennzeichnet, dass** die Systemsteuereinheit (62) dazu konfiguriert ist, die Antriebseinheit (16) und/oder die Ausgabeeinheit (18) mittels der Applikatorsteuereinheit zu steuern.

12. System nach einem der vorhergehenden Ansprüche 9 bis 11, **dadurch gekennzeichnet, dass** das System eine Belichtungseinheit (40) aufweist, die ausgebildet ist, Licht auf den Formfaserverbundstrang (6) zu richten, so dass der Formfaserverbundstrang (6) aushärtet.

13. Verfahren zum Ausgeben eines Formfaserverbundstrangs (6) mittels einer Applikationsvorrichtung (2), die mit einer zugehörigen Koppeleinheit (8) an einer Handhabungsvorrichtung (4) lösbar befestigbar ist, so dass die Applikationsvorrichtung (2) von der Handhabungsvorrichtung (4) im Raum bewegbar ist, wobei das Verfahren die Schritte aufweist:
a) Kontinuierliches Formen eines einer Vorformeinheit (10) der Applikationsvorrichtung (2) kontinuierlich zugeführten Rohfaserstrang (20) mit einer Vielzahl von Endlosfasern (22) zu einem Formfaserstrang (24) mit einem von der Vorformeinheit (10) einstellbaren Formfaserquerschnitt (26);
b) Kontinuierliches imprägnieren des Formfaserstrangs (24) mit einem nicht vollständig vernetzten Matrixmaterial (38) mittels einer Imprägnierungseinheit (12) der Applikationsvorrichtung (2) zu einem Faserverbundstrang (28), wobei der Formfaserstrang (24) der Imprägnierungseinheit (12) kontinuierlich zugeführt wird;
c) Kontinuierliches Pressen des einer Antriebseinheit (16) der Applikationsvorrichtung (2) von der Imprägnierungseinheit (12) kontinuierlich zugeführten Faserverbundstrangs (28) mittels der Antriebseinheit (16) zu und durch eine Ausgabeeinheit (18) der Applikationsvorrichtung (2);
d) Kontinuierliches Formen und Ausgeben des durch die Ausgabeeinheit (18) kontinuierlich gepressten Faserverbundstrangs (28) mittels der Ausgabeeinheit (18) zu einem Formfaserverbundstrang (6) mit einem von der Ausgabeeinheit (18) einstellbaren Ausgabequerschnitt (30), wobei die Vorformeinheit (10) und die Ausgabeeinheit (18) derart eingestellt sind, dass der Formfaserquerschnitt (26) zu mindestens 70% mit dem Ausgabequerschnitt (30) deckungsgleich ist.

14. Verfahren nach dem vorhergehenden Anspruch, **dadurch gekennzeichnet, dass** die Vorformeinheit (10) mehrere verstellbare Vorformwerkzeugteile zum Formen des Formfaserstrangs (24) aufweist, die Vorformeinheit (10) zum Verstellen der Vorformwerkzeuge steuerbar ist, um den Formfaserstrang (24) mit einem gesteuert eingestellten Formfaserquerschnitt (26) zu formen, die Ausgabeeinheit (18) mehrere verstellbare Ausgabeformwerkzeugteile zum Formen des Formfaserverbundstrangs (6) aufweist, die Ausgabeeinheit (18) zum Verstellen der Ausgabeformwerkzeuge steuerbar ist, um den Formfaserverbundstrang (6) mit einem gesteuert eingestellten Ausgabequerschnitt (30) zu formen, und die Vorformeinheit (10) und/oder die Ausgabeeinheit (18) derart gesteuert wird bzw. werden, so dass der Formfaserquerschnitt (26) zu mindestens 70% mit dem Ausgabequerschnitt (30) deckungsgleich ist.

15. Verfahren nach einem der vorhergehenden Ansprüche 13 bis 14, **dadurch gekennzeichnet, dass** die Applikationsvorrichtung (2) mit der Koppeleinheit (8) an einer Aufnahmeeinheit (60) befestigt ist, so dass die Applikationsvorrichtung (2) mit der Handhabungsvorrichtung (4) verbunden und von der Handhabungsvorrichtung (4) vollständig getragen ist, und wobei die Applikationsvorrichtung (2) mittels der Handhabungsvorrichtung (4) derart durch den Raum geführt wird, dass die Ausgabeeinheit (18) entlang eines Ausgabepfads geführt wird, währenddessen die Applikationsvorrichtung (2) den Formfaserverbundstrang (6) kontinuierlich ausgibt, so dass sich die Fasern in dem Formfaserverbundstrang (6) zumindest im Wesentlichen knickfrei und/oder schlaufenfrei entlang des Ausgabepfads erstrecken.

## Claims

1. Application device (2) for a handling device (4) and for dispensing a moulded fibre composite strand (6), comprising:
a coupling unit (8) by means of which the application device (2) can be detachably attached to the handling device (4) so that the application device (2) can be moved in space by the handling device (4);
a preform unit (10);
an impregnation unit (12); and
a postforming unit (14) comprising a drive unit (16) and an adjustable output unit (18);
wherein the preforming unit (10) is designed to continuously form a raw fibre strand (20) continuously fed to the preforming unit (10) with a plurality of continuous fibres (22) into a shaped fibre strand (24) with a shaped fibre cross-section (26) adjustable by the preforming unit (10) ;
wherein the impregnation unit (12) is configured to continuously form a fibre composite strand (28) from the shaped fibre strand (24) continuously supplied from the preform unit (10) by impregnation with a matrix material (38) which is incompletely cross-linked;
wherein the drive unit (16) of the postforming unit (14) is designed to continuously press the fibre composite strand (28), which is continuously fed from the impregnation unit (12), towards and through the output unit (18);
wherein the output unit (18) is configured to continuously form and output a fibre composite strand (28) continuously pressed by the output unit (18) into a moulded fibre composite strand (6) having an output cross-section (30) adjustable by the output unit (18); and
wherein the preform unit (10) and the output unit (18) are adjusted in such a way that the shaped fibre cross-section (26) is at least 70% congruent with the output cross-section (30).

2. Application device (2) according to the preceding claim, **characterised in that** the preform unit (10) comprises a first tool receptacle and a first forming tool interchangeably held by the first tool receptacle, the shaped fibre cross-section (26) being determined by the first forming tool.

3. Application device (2) according to any one of the preceding claims, **characterized in that** the output unit (18) comprises a second tool receptacle and a second forming tool interchangeably held by the second tool receptacle, the dispensing cross-section (30) being determined by the second forming tool.

4. Application device (2) according to claim 3, **characterized in that** the first forming and the second forming tool are determined and/or designed with respect to each other in such a way that the shaped fibre cross-section (26) is at least 70% congruent with the output cross-section (30).

5. Application device (2) according to any one of the preceding claims, **characterised in that** the preform unit (10) comprises a plurality of adjustable preform tool parts for forming the shaped fibre strand (24), the preform unit (10) being controllable to adjust the preform tool parts so as to form the shaped fibre strand (24) with a controlled adjusted shaped fibre cross-section (26).

6. Application device (2) according to any one of the preceding claims, **characterized in that** the output unit (18) comprises a plurality of adjustable dispensing mould parts for moulding the moulded fibre composite strand (6), the output unit (18) being controllable to adjust the dispensing mould parts so as to mould the moulded fibre composite strand (6) with a controlled adjusted dispensing cross-section (30).

7. Application device (2) according to one of the preceding claims, **characterized in that** the application device (2) comprises an applicator control unit which is designed to control the preform unit (10) and/or the output unit (18) in such a way that the shaped fibre cross-section (26) is at least 70% congruent with the dispensing cross-section (30) .

8. Application device (2) according to one of the preceding claims, **characterised in that** the application device (2) has a curing unit for curing, in particular heating unit (48) for heating, the moulded fibre composite strand (6) or has a solidification unit (50) for solidifying the moulded fibre composite strand (6).

9. A system for dispensing a moulded fibre composite strand (6), comprising:
an application device (2) according to any one of the preceding claims,
a handling device (4) adapted to move an associated pick-up unit (60) in space in a controlled manner, and
a system control unit (62) for controlling the handling device (4);
wherein the coupling unit (8) is attached to the pick-up unit (60) so that the application device (2) is connected to and fully supported by the handling device (4) .

10. A system according to the preceding claim, **characterised in that** the applicator control unit is associated with the system control unit (62), controlled by the system control unit (62) and/or formed by the system control unit (62).

11. A system according to any one of the preceding claims 9 to 10, **characterized in that** the system control unit (62) is configured to control the drive unit (16) and/or the dispensing unit (18) by means of the applicator control unit.

12. A system according to any one of the preceding claims 9 to 11, **characterised in that** the system comprises an exposure unit (40) adapted to direct light onto the moulded fibre composite strand (6) such that the moulded fibre composite strand (6) cures.

13. A method of dispensing a moulded fibre composite strand (6) by means of an application device (2) releasably attachable to a handling device (4) by an associated coupling unit (8) so that the application device (2) is movable in space by the handling device (4), the method comprising the steps of:
a) Continuous moulding of a raw fibre strand (20) continuously fed to a preform unit (10) of the application device (2) with a plurality of continuous fibres (22) into a shaped fibre strand (24) with a shaped fibre cross-section (26) adjustable by the preform unit (10);
b) Continuous impregnation of the shaped fibre strand (24) with a incompletely cross-linked matrix material (38) by means of an impregnation unit (12) of the application device (2) to form a fibre composite strand (28), wherein the shaped fibre strand (24) is continuously fed to the impregnation unit (12);
c) Continuously pressing the fibre composite strand (28) continuously fed to a drive unit (16) of the application device (2) from the impregnation unit (12) by means of the drive unit (16) to and through an output unit (18) of the application device (2);
d) Continuous shaping and delivery of the fibre composite strand (28) continuously pressed by the output unit (18) by means of the output unit (18) to form a moulded fibre composite strand (6) with an output cross-section (30) which can be set by the output unit (18), wherein the preform unit (10) and the output unit (i8) are set in such a way that the shaped fibre cross-section (26) is at least 70% congruent with the output cross-section (30) .

14. A method according to the preceding claim, **characterized in that** the preform unit (10) comprises a plurality of adjustable preform tool parts for forming the shaped fibre strand (24), the preform unit (10) is controllable for adjusting the preform tools to form the shaped fibre strand (24) with a controlled adjusted shaped fibre cross-section (26), the output unit (18) comprises a plurality of adjustable output mould parts for moulding the moulded fibre composite strand (6), the output unit (18) is controllable to adjust the output moulds to mould the moulded fibre composite strand (6) with a controlled output cross-section (30), and the preform unit (10) and/or the output unit (18) is/are controlled such that the moulded fibre composite strand (6) is formed with a controlled output cross-section (30) such that the shaped fibre cross-section (26) is at least 70% congruent with the output cross-section (30).

15. A method according to any one of the preceding claims 13 to 14, **characterized in that** the application device (2) is fixed with the coupling unit (8) to a receiving unit (60) so that the application device (2) is connected to the handling device (4) and is fully supported by the handling device (4), and wherein the application device (2) is guided through the space by means of the handling device (4) in such a way that the output unit (18) is guided along a dispensing path, meanwhile the application device (2) continuously dispenses the moulded fibre composite strand (6) so that the fibres in the moulded fibre composite strand (6) extend along the dispensing path at least substantially free of kinks and/or loops.

## Revendications

1. Dispositif d'application (2) pour un appareil de manutention (4) et pour la distribution d'un brin de composite de fibres moulées (6), comprenant :
une unité d'accouplement (8) au moyen de laquelle le dispositif d'application (2) peut être fixé de manière amovible au dispositif de manutention (4) de sorte que le dispositif d'application (2) puisse être déplacé dans l'espace par le dispositif de manutention (4);
une unité de préforme (10);
une unité d'imprégnation (12); et
une unité de postformation (14) comprenant une unité d'entraînement (16) et une unité de sortie réglable (18);
dans lequel l'unité de préforme (10) est conçue pour former en continu un brin de fibres brutes (20) alimenté en continu à l'unité de préforme (10) avec une pluralité de fibres continues (22) en un brin de fibres façonnées (24) avec une section transversale de fibres formée (26) réglable par l'unité de préforme (10);
dans lequel l'unité d'imprégnation (12) est configurée pour former en continu un brin de composite de fibres (28) à partir du brin de fibres façonné (24) fourni en continu par l'unité de préforme (10) par imprégnation avec une matrice matérielle (38) qui est incomplètement réticulée;
dans lequel l'unité d'entraînement (16) de l'unité de postformation (14) est conçue pour presser en continu le brin de composite de fibres (28), qui est alimenté en continu depuis l'unité d'imprégnation (12), vers et à travers l'unité de sortie (18);
dans lequel l'unité de sortie (18) est configurée pour former et produire de manière continue un brin de composite de fibres (28) pressé en continu par l'unité de sortie (18) en un brin de composite de fibres moulé (6) ayant une section transversale de sortie (30) réglable par l'unité de sortie (18); et
dans laquelle l'unité de préforme (10) et l'unité de sortie (18) sont ajustées de telle manière que la section transversale de la fibre formée (26) soit au moins à 70% congruente avec la section transversale de sortie (30).

2. Dispositif d'application (2) selon la revendication précédente, **caractérisé en ce que** l'unité de préforme (10) comprend un premier réceptacle d'outil et un premier outil de formage maintenu de manière interchangeable par le premier réceptacle d'outil, la section transversale de la fibre formée (26) étant déterminée par le premier outil de formage.

3. Dispositif d'application (2) selon l'une quelconque des revendications précédentes, **caractérisé en ce que** l'unité de sortie (18) comprend un deuxième réceptacle d'outil et un deuxième outil de formage maintenu de manière interchangeable par le deuxième réceptacle d'outil, la section transversale de sortie (30) étant délimitée par le deuxième outil de formage.

4. Dispositif d'application (2) selon la revendication 3, **caractérisé en ce que** le premier outil de formage et le deuxième outil de formage sont déterminés et/ou conçus l'un par rapport à l'autre de telle sorte que la section transversale de la fibre formée (26) soit au moins à 70% congruente avec la section transversale de sortie (30).

5. Dispositif d'application (2) selon l'une quelconque des revendications précédentes, **caractérisé en ce que** l'unité de préforme (10) comprend une pluralité de parties d'outil de préforme réglables pour former le brin de fibres façonnées (24), l'unité de préforme (10) pouvant être commandée pour régler les parties d'outil de préforme de manière à former le brin de fibres façonnées (24) avec une section transversale de fibres formée (26) réglée et contrôlée.

6. Dispositif d'application (2) selon l'une quelconque des revendications précédentes, **caractérisé en ce que** l'unité de sortie (18) comprend une pluralité de pièces de moule de distribution réglables pour mouler le brin composite de fibres moulées (6), l'unité de sortie (18) pouvant être commandée pour régler les pièces de moule de distribution de manière à mouler le brin composite de fibres moulées (6) avec une section transversale de sortie réglée et contrôlée (30).

7. Dispositif d'application (2) selon l'une des revendications précédentes, **caractérisé en ce que** le dispositif d'application (2) comprend une unité de commande de l'applicateur qui est conçue pour commander l'unité de préforme (10) et/ou l'unité de sortie (18) de telle sorte que la section transversale de la fibre formée (26) soit au moins à 70% congruente avec la section transversale de sortie (30).

8. Dispositif d'application (2) selon l'une des revendications précédentes, **caractérisé en ce que** le dispositif d'application (2) présente une unité de durcissement pour le durcissement, en particulier une unité de chauffage (48) pour le chauffage, du brin composite de fibres moulées (6) ou présente une unité de solidification (50) pour la solidification du brin composite de fibres moulées (6).

9. Un système de distribution d'un brin composite de fibres moulées (6), comprenant:
un dispositif d'application (2) selon l'une des revendications précédentes,
un dispositif de manipulation (4) adapté pour déplacer une unité de prise associée (60) dans l'espace de manière contrôlée, et
une unité de commande du système (62) pour contrôler le dispositif de manipulation (4);
dans lequel l'unité d'accouplement (8) est fixée à l'unité de prise (60) de sorte que le dispositif d'application (2) est relié au dispositif de manipulation (4) et entièrement supporté par celui-ci.

10. Un système selon la revendication précédente, **caractérisé en ce que** l'unité de commande de l'applicateur est associée à l'unité de commande du système (62), contrôlée par l'unité de commande du système (62) et/ou formée par l'unité de commande du système (62).

11. Système selon l'une des revendications précédentes 9 à 10, **caractérisé en ce que** l'unité de commande du système (62) est configurée pour commander l'unité d'entraînement (16) et/ou l'unité de sortie (18) au moyen de l'unité de commande de l'applicateur.

12. Système selon l'une quelconque des revendications précédentes 9 à 11, **caractérisé en ce que** le système comprend une unité d'exposition (40) adaptée pour diriger la lumière sur le brin de composite de fibres moulées (6) de telle sorte que le brin de composite de fibres moulées (6) durcisse.

13. Procédé de distribution d'un brin composite de fibres moulées (6) au moyen d'un dispositif d'application (2) pouvant être fixé de manière amovible à un dispositif de manipulation (4) par une unité de couplage associée (8), de sorte que le dispositif d'application (2) est mobile dans l'espace par le dispositif de manipulation (4), le procédé comprenant les étapes suivantes:
a) Moulage en continu d'un brin de fibres brutes (20) amené en continu à une unité de préforme (10) du dispositif d'application (2) avec une pluralité de fibres continues (22) en un brin de fibres façonnées (24) avec une section transversale de fibres formées (26) réglable par l'unité de préforme (10);
b) imprégnation continue du brin de fibres façonnées (24) avec une matière de matrice (38) incomplètement réticulée au moyen d'une unité d'imprégnation (12) du dispositif d'application (2) pour former un brin composite de fibres (28), le brin de fibres façonnées (24) étant amené en continu à l'unité d'imprégnation (12);
c) Presser en continu le brin de fibres composites (28) alimenté en continu à une unité d'entraînement (16) du dispositif d'application (2) depuis l'unité d'imprégnation (12) au moyen de l'unité d'entraînement (16) vers et à travers une unité de sortie (18) du dispositif d'application (2);
d) Façonnage et amenée en continu du brin de fibres composites (28) pressé en continu par l'unité de sortie (18) au moyen de l'unité de sortie (18) pour former un brin de fibres composites moulé (6) avec une section transversale de sortie (30) réglable par l'unité de sortie (18), l'unité de préforme (10) et l'unité de sortie (i8) étant réglées de telle sorte que la section de fibres formées (26) soit congruente à la section transversale de sortie (30) à raison d'au moins 70 %.

14. Procédé selon la revendication précédente, **caractérisé en ce que** l'unité de préforme (10) comprend une pluralité de parties d'outils de préforme réglables pour former le brin de fibres façonnées (24), l'unité de préforme (10) peut être pilotée pour régler les outils de préforme afin de former le brin de fibres façonnées (24) avec une section transversale de fibres formées réglée et contrôlée (26), l'unité de sortie (18) comprend une pluralité de parties de moule de sortie réglables pour mouler le brin composite de fibres moulées (6), l'unité de sortie (18) peut être commandée pour ajuster les moules de sortie afin de mouler le brin composite de fibres moulées (6) avec une section transversale de sortie contrôlée (30), et l'unité de préforme (10) et/ou l'unité de sortie (18) est/sont commandée(s) de telle sorte que le brin composite de fibres moulées (6) est formé avec une section transversale de sortie contrôlée (30) de telle sorte que la section de fibre formée (26) est au moins à 70% congruente avec la section transversale de sortie (30).

15. Procédé selon l'une des revendications précédentes 13 à 14, **caractérisé en ce que** le dispositif d'application (2) est fixé avec l'unité de couplage (8) à une unité de réception (60) de sorte que le dispositif d'application (2) est connecté au dispositif de manipulation (4) et est entièrement supporté par le dispositif de manipulation (4), et dans lequel le dispositif d'application (2) est guidé à travers l'espace au moyen du dispositif de manipulation (4) de telle sorte que l'unité de sortie (18) est guidée le long d'un chemin de distribution, tandis que le dispositif d'application (2) distribue en continu le brin composite de fibres moulées (6) de sorte que les fibres dans le brin composite de fibres moulées (6) s'étendent le long du chemin de distribution au moins sensiblement sans coudes et/ou boucles.
